(19) Europäisches Patentamt
European Patent Office
Office européen des brevets

(11) EP 3 741 814 B1

(12) # EUROPEAN PATENT SPECIFICATION

(45) Date of publication and mention of the grant of the patent:
**14.08.2024 Bulletin 2024/33**

(21) Application number: **19176552.8**

(22) Date of filing: **24.05.2019**

(51) International Patent Classification (IPC):
***C09D 5/02*** *(2006.01)* ***C09D 7/40*** *(2018.01)*
***C09D 7/42*** *(2018.01)* ***C09D 7/61*** *(2018.01)*
***C09D 133/04*** *(2006.01)*

(52) Cooperative Patent Classification (CPC):
(C-Sets available)
**C09D 7/70; C09D 5/024; C09D 7/42; C09D 7/61; C09D 133/04;** C08K 7/04; C08K 7/14; C08K 7/18; C08K 7/20; C08K 2201/003 (Cont.)

(54) **COMPOSITION**
ZUSAMMENSETZUNG
COMPOSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.11.2020 Bulletin 2020/48**

(73) Proprietor: **Jotun A/S**
**3202 Sandefjord (NO)**

(72) Inventors:
- **LANGEID, Petter**
**3209 Sandefjord (NO)**
- **FLENSTAD, Siri G**
**3209 Sandefjord (NO)**
- **KVILHAUG, Eli Birgitte Reitan**
**3209 Sandefjord (NO)**

(74) Representative: **Marks & Clerk LLP**
**15 Fetter Lane**
**London EC4A 1BW (GB)**

(56) References cited:
**EP-A2- 0 700 976** **WO-A1-2009/134538**
**WO-A1-2016/176145** **CN-A- 106 883 716**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 741 814 B1

(52) Cooperative Patent Classification (CPC): (Cont.)

C-Sets
**C09D 133/04, C08K 2003/2237, C08K 3/34**

**Description**

INTRODUCTION

The present invention relates to a coating composition comprising: (i) a poly(meth)acrylate dispersion, wherein said poly(meth)acrylate has a minimum film formation temperature (MFFT) of 5 °C or less; (ii) solid, spherical filler particles having a $D_{98}$ of less than 25 μm; (iii) lamellar filler particles; and (iv) water, as well as to methods of preparing such compositions. Additionally the invention relates to a container containing the composition, to a method of providing a coating on a surface, wherein the composition herein described is applied to the surface and allowed to dry and to a coating on a surface, wherein the coating is formed from a composition as herein described.

BACKGROUND

A coating (e.g. paint film) should be wear and tear resistant to protect the surface on which it is present and to give a desirable aesthetic appearance. The coating should be robust enough to be washable and it should look like newly applied paint after washing. This is particularly important because the improved wear and tear resistance of the coating means that its lifetime is longer and the interval between repainting is longer.

Traditionally, interior paint lacks robustness towards spills from food and liquids that cause stains (e.g. coffee, red wine, ketchup and oils). Other stains like shoe marks and outdoor dirt can also be a challenge to remove. Stains often penetrate the coating itself and be virtually impossible to remove by washing without leaving visible marks in the washed coating. Avoiding gloss changes after washing is important since it is critical for gloss to be consistent across the coating surface, i.e. including non-washed and washed areas if it is to look new and fresh.

Coating compositions with high gloss are typically more robust to stain penetration and washing and also tend to provide a smoother coating surface which facilitates washing and reduces dirt pickup. This is believed to be due to the use of fillers of relatively small particle size, together with high binder content. Washability, stain penetration resistance and low gloss increase after washing can also be improved by employing polymers with a minimal film formation temperature (MFFT) of greater than 5°C in conjunction with a coalescent. The coalescent ensures a coating still forms at room temperature. The higher MFFT gives a coating film with higher hardness which will decrease the adhesion of staining materials to the coating surface as well as making the coating more resistant to marks during washing.

End users, however, want to be able to select coating compositions which give a semi-gloss or matt finish coating. Currently these are more desirable than gloss paints. Traditional matting of interior paints is achieved by using coarse inorganic fillers (e.g. silica, barium sulphate, calcium carbonate, nepheline syenite, dolomite) or matting agents (e.g. fumed or amorphous synthetic silica). The presence of these fillers and/or matting agents, however, decreases the stain penetration resistance, polish resistance and smoothness of the coating. Generally the lower the gloss level the more challenging it is to make a coating composition which is stain resistant, with low surface friction, polish resistance and good washability properties.

WO2017/015006 discloses a coating composition comprising a plurality of ceramic microspheres having a $D_{50}$ diameter of 2 to 20 microns and a $D_{50}/D_{90}$ ratio greater than 0.50, as measured by light scattering, and at least one film forming polymer. A $D_{50}/D_{90}$ ratio of 1.0 would mean the $D_{50}$ and $D_{90}$ values are identical, thus a $D_{50}/D_{90}$ ratio of at least 0.5 represents a narrow particle size distribution. In fact WO2017/015006 explicitly teaches that its use of a plurality of ceramic microspheres having a narrow particle size distribution is responsible for improving the performance of the coating, e.g. durability and appearance.

WO2016/176145 discloses an aqueous stain resistant coating composition, with low VOC, which comprises one or more aqueous dispersions of self-crosslinkable polymeric particles having a Tg of 10 °C or less and one or more particulate solids wherein the particulate solids comprise a combination of sheet-like particulate solids and sphere-like particulate solids in a weight ratio of at least 1:1, i.e. the composition must contain more sheet-like particulate solids than sphere-like particulate solids. WO2016/176145 hypothesises that this specific combination of particulate solids allows a highly compact coating to form, even at high PVC levels, because the sheet-like particulates form in a "scaly arrangement structure" and the sphere-like particulates fill the pores therein. It is thought that this provides an improved barrier property and renders the resulting coatings more stain resistant.

SUMMARY OF THE INVENTION

Viewed from a first aspect the present invention provides a coating composition comprising:

(i) a poly(meth)acrylate dispersion, wherein said poly(meth)acrylate has a minimum film formation temperature (MFFT) of 5 °C or less;
(ii) solid, spherical filler particles having a $D_{98}$ of less than 25 μm;

(iii) lamellar filler particles; and
(iv) water,

wherein said composition comprises a higher weight % of said solid, spherical filler particles than said lamellar filler particles.

Viewed from a further aspect the present invention provides a method for preparing a composition as described herein, comprising mixing:

(i) a poly(meth)acrylate dispersion, wherein said poly(meth)acrylate has a minimum film formation temperature (MFFT) of 5 °C or less;
(ii) solid, spherical filler particles having a $D_{98}$ of less than 25 μm;
(iii) lamellar filler particles; and
(iv) water.

Viewed from a further aspect the present invention provides a container containing a composition as hereinbefore defined.

Viewed from a further aspect the present invention provides a method of providing a coating on a surface, wherein said method comprises:

(i) applying a composition as hereinbefore described; and
(ii) allowing said composition to dry to form a coating on the surface.

Viewed from a further aspect the present invention provides a coating on a surface, preferably a wall, wherein said coating is formed from a composition as hereinbefore described.

Viewed from a further aspect the present invention provides the use of a composition as hereinbefore described to form a coating on a wall.

Viewed from a further aspect the present invention provides a coating composition comprising:

(i) a poly(meth)acrylate dispersion;
(ii) filler particles, preferably solid, spherical filler particles and lamellar filler particles; and
(iii) water,

wherein said composition has:

(a) a VOC of less than 30 g/L, preferably 0-10 g/L;
(b) a TVOC of less than 50 g/L, preferably 0-20 g/L;
(c) a Stormer viscosity of 80-140 KU, preferably 90-135 KU; and
(d) a Cone and Plate viscosity of 50-600 mPa˙s (50-600 cP),

preferably 70-400 mPa˙s (70-400 cP).

Viewed from a further aspect the present invention provides a coating comprising a poly(meth)acrylate and filler particles, preferably solid, spherical filler particles and lamellar filler particles, and said coating:

(a) has a gloss of less than 10, preferably less than 6, at an angle of 60°;
(b) has a gloss of less than 10, preferably less than 9, at an angle of 85°;
(c) a kinetic friction of less than 0.70, preferably less than 0.65;
(d) a polish % of less than 5, preferably less than 4, as measured at 60°; and
(e) a polish % of less than 35, preferably less than 29, as measured at 85°.

DEFINITIONS

As used herein the term "coating composition" refers to a composition that, when applied to a surface, forms a film or coating thereon.

As used herein the term "waterborne composition" refers to a dispersion wherein the continuous phase is water. In a waterborne composition the poly(meth)acrylate is typically dispersed as particles in a continuous aqueous phase.

As used herein the term "poly(meth)acrylate" refers to a polymer comprising repeat units derived from (meth)acrylate monomers. Generally a poly(meth)acrylate will comprise at least 65 wt% repeat units derived from (meth)acrylate monomers, i.e. acrylate and/or methacrylate monomers.

As used herein the term "poly(meth)acrylate dispersion" refers to a mixture of poly(meth)acrylate particles dispersed in a continuous liquid phase. Typically the continuous liquid phase is aqueous.

As used herein the term "alkyl" refers to saturated, straight chained, branched or cyclic groups. Alkyl groups may be substituted or unsubstituted.

As used herein the term "cycloalkyl" refers to saturated or partially saturated mono- or bicyclic alkyl ring systems containing 3 to 10 carbon atoms. Cycloalkyl groups may be substituted or unsubstituted.

As used herein the term "coalescent" refers to a compound which assists in the formation of a continuous coating or film when the composition is applied to a substrate. Coalescents are sometimes referred to in the art as film-forming agents.

As used herein the term "filler" refers to a compound which increases the volume or bulk of a coating composition. They are substantially insoluble in the coating composition and are dispersed therein. When filler particles sizes are referred to herein, it is the particle size when they are added to the composition.

As used herein the term "solid" in the phrase "solid, spherical filler particles" refers to non-hollow particles. The term "spherical" in the phrase "solid, spherical filler particles" encompasses substantially spherical and spherical particles. Substantially spherical particles are identical in size in each of the x, y and z dimensions, $\pm$ 1.2 $\mu$m, more preferably $\pm$ 0.6 $\mu$m.

As used herein the term $D_{98}$ refers to the value of the particle diameter at 98% cumulative distribution. It is determined by ISO 13320:2009 using a Malvern Mastersizer 2000 as described in the Test Method description.

As used herein the term $D_{50}$ refers to the value of the particle diameter at 50 % cumulative distribution. It is sometimes referred to as the median diameter. It is determined by ISO 13320:2009 using a Malvern Mastersizer 2000 as described in the Test Method description.

As used herein the term "lamellar filler particles" refers to particles which have a significantly smaller thickness (e.g. at least 5 times less) compared to their length. Lamellar particles are plate-like in form.

As used herein the term "weight % (wt%)", when used in relation to individual constituents of the composition, e.g. rheology modifier, biocide, etc., refers to the actual weight of constituent, i.e. without volatile components present, unless otherwise specified.

As used herein the term "weight % (wt%)", when used in relation to the coating compositions, refers to the weight relative to the total weight of the composition, i.e. including non-volatile and volatile components, unless otherwise specified.

As used herein the term "solvent" refers to water and organic solvent.

As used herein the term "Volatile Organic Compounds" refers to compounds having a boiling point $\leq$ 250°C at 101.3 kPa. This is the definition given in EU Directive 2004/42/CE.

As used herein the term "Semi Volatile Organic Compounds, SVOC (g/L)", are compounds having a boiling point higher than 250°C and $\leq$ 400°C at 101.3 kPa. The term "Total Volatile Organic Compounds, TVOC (g/L)", refers to the total content of volatile organic compounds (VOC+SVOC) in the coating composition, i.e. all compounds having a boiling point $\leq$ 400 °C at 101.3 kPa.

As used herein the term "Tg" refers to "glass transition temperature" as determined by ASTM E 1356-08(2014).

As used herein the term "MFFT" refers to "minimal film formation temperature" as determined by ASTM D2354-10e1.

As used herein the term "molecular weight" refers to weight average molecular weight (Mw), unless otherwise specified. It is determined by Gel Permeation Chromatography.

As used herein the term "density" when used in relation to a liquid or dispersion refers to density as determined by ISO 2811-1 :2016 using a metal pycnometer at 23 °C.

As used herein the term "density" when used in relation to solids refers to density as determined by ISO 787-7:2009 part 10.

As used herein the term "particle size" is used in relation to polymer dispersions to refer to the Z-average diameter size as determined by ISO 22412:2017 using a Malvern Zetasizer Nano S instrument.

## DETAILED DESCRIPTION OF THE INVENTION

The present invention relates to a coating composition comprising: (i) a poly(meth)acrylate dispersion, wherein said poly(meth)acrylate has a minimum film formation temperature (MFFT) of 5 °C or less; (ii) solid, spherical filler particles having a $D_{98}$ of less than 25 $\mu$m; (iii) lamellar filler particles; and (iv) water, wherein the composition comprises a higher weight % of the solid, spherical filler particles than the lamellar filler particles. Preferably the weight ratio of the solid, spherical filler particles to the lamellar filler particles is at least 1.2:1. More preferably the weight of the solid, spherical filler particles to the lamellar filler particles is 1.2:1 to 20:1, more preferably 1.5:1 to 10:1 and still more preferably 1.9:1 to 5:1.

Preferably the coating composition of the present invention further comprises: (v) colour pigment; (vi) rheology

modifier; (vii) foam control agent; (viii) biocide; (ix) dispersing agent; and (x) additives. Preferably the coating composition comprises less than 4 wt% coalescent.

Advantageously the coating composition of the present invention has a low VOC and TVOC content and produces low gloss, matt coatings which have a smooth surface (i.e. low kinetic friction) that is easy to clean and which does not visibly change after washing, i.e. polish resistance is high. The coating also has a high stain penetration resistance. The combination of a matt finish, with low kinetic friction, improved polish resistance and improved stain penetration resistance provides a coating which is durable and has a high aesthetic appeal. It means that the coatings consistently look "new" or fresh. A further benefit of the coatings produced by the compositions of the present invention is that the gloss level is consistent, regardless of the viewing angle.

Poly(meth)acrylate dispersion

The coating composition of the present invention comprises a poly(meth)acrylate dispersion. As is well known to the person skilled in the art, a poly(meth)acrylate dispersion is a composition comprising polymer particles dispersed in a solvent. The dispersed poly(meth)acrylate may be any (meth)acrylate polymer suitable for use as a film-forming polymer in coating compositions. Such poly(meth)acrylates are well known in the art. The liquid phase, i.e. solvent of the dispersion, is preferably aqueous. More preferably the liquid phase consists of water.

Preferred poly(meth)acrylate dispersions present in the coating compositions of the present invention comprise a poly(meth)acrylate having a minimal film formation temperature (MFFT) of 5 °C or less. Preferably the poly(meth)acrylate dispersions present in the coating compositions of the present invention comprise a poly(meth)acrylate having the minimal film formation temperature (MFFT) of -5.0 to 5.0 °C, more preferably 0 to 5.0 °C and still more preferably 1.0 to 4.0 °C . MFFT is determined by ASTMD2354-10e1. This is advantageous as a low MFFT makes it possible to form a coating at room temperature without the need to add a coalescent. By avoiding the addition of a coalescent the VOC and TVOC of the coating composition may be kept low.

Preferred poly(meth)acrylate dispersions present in the coating compositions of the present invention comprise a poly(meth)acrylate having a Tg of 0 to 10.0 °C, more preferably 1.0 to 8.0 °C and still more preferably 3.0 to 7.0 °C, as determined by ASTM E1356-08(2014).

The poly(meth)acrylate dispersion preferably comprises a poly(meth)acrylate polymer comprising at least 65 wt%, more preferably at least 80 wt%, still more preferably at least 90 wt% and yet more preferably at least 95 wt%, (meth)acrylate monomers, based on the dry weight of the polymer. Preferred poly(meth)acrylate polymers present in the poly(meth)acrylate dispersion in the coatings of the present invention comprise 65-100 wt%, more preferably 80-100 wt%, still more preferably 90-100 wt% and yet more preferably 95-100 wt% (meth)acrylate monomers, based on the dry weight of the polymer.

Examples of poly(meth)acrylate polymers comprising non-acrylate monomers are poly(meth)acrylate-polyurethanes, poly(meth)acrylate-polyesters and poly(meth)acrylate-silicones/siloxanes. Such polymers typically comprise a poly(meth)acrylate backbone and side chains of polyurethane, polyester or silicone/siloxane. The side chains are typically grafted onto the poly(meth)acrylate backbone. Poly(meth)acrylate-polyurethanes and poly(meth)acrylate-silicones/siloxanes are preferred. When the poly(meth)acrylate comprises non-(meth)acrylate monomers, the amount of non-(meth)acrylate monomers is preferably 1-35 wt%, more preferably 1-20 wt%, still more preferably 1-10 wt% and yet more preferably 1 to 5 wt%. Particularly preferably, however, poly(meth)acrylate polymers present in the poly(meth)acrylate dispersion comprise 100 wt% (meth)acrylate monomers, i.e. they do not comprise any monomers of another type, based on the dry weight of the polymer.

The poly(meth)acrylate present in the poly(meth)acrylate dispersion present in the coating compositions of the present invention may be a homopolymer or a copolymer. Preferably the poly(meth)acrylate is a copolymer. Particularly preferably the poly(meth)acrylate comprises at least two (e.g. 2, 3, 4 or more) different (meth)acrylate monomers.

Preferably the poly(meth)acrylate dispersion comprises a poly(meth)acrylate polymer comprising a residue of at least one, and preferably at least two, monomers of formula (I):

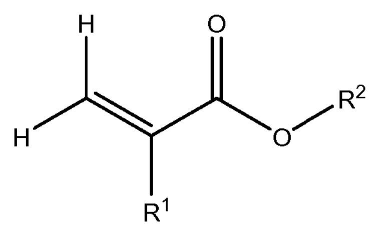

(I)

$R^1$ is H or $CH_3$;

$R^2$ is H or optionally substituted $C_{1-18}$ alkyl, wherein said substituents are selected from OH and $OR^3$; and
$R^3$ is selected from $C_{1-8}$ alkyl and $C_{3-8}$ cycloalkyl.

In preferred monomers of formula (I), $R^2$ is H or optionally substituted $C_{1-12}$ alkyl, more preferably H or optionally substituted $C_{1-10}$ alkyl and still more preferably H or optionally substituted $C_{1-10}$ alkyl.

In some preferred monomers of formula (I), $R^2$ is H or unsubstituted $C_{1-12}$ alkyl, more preferably H or unsubstituted $C_{1-10}$ alkyl and still more preferably H or unsubstituted $C_{1-10}$ alkyl.

In other preferred monomers of formula (I), $R^2$ is H or substituted $C_{1-12}$ alkyl, more preferably H or substituted $C_{1-10}$ alkyl and still more preferably H or substituted $C_{1-10}$ alkyl, wherein the substituents are selected from OH and $OR^3$, and $R^3$ is selected from $C_{1-8}$ alkyl and $C_{3-8}$ cycloalkyl. More preferred substituents are selected from OH and $OR^3$, wherein $R^3$ is $C_{1-8}$ alkyl.

Preferably the poly(meth)acrylate dispersion comprises a (meth)acrylate polymer comprising a residue of at least one monomer selected from methyl (meth)acrylate, ethyl (meth)acrylate, propyl (meth)acrylate, butyl (meth)acrylate, hexyl (meth)acrylate, 2-ethylhexyl (meth)acrylate, octyl (meth)acrylate, isooctyl (meth)acrylate, n-decyl (meth)acrylate, isodecyl (meth)acrylate, tert-butyl (meth)acrylate and 2-hydroxyethyl (meth)acrylate. Particularly preferably the poly(meth)acrylate dispersion comprises a (meth)acrylate polymer comprising a residue of at least one, and preferably at least two, monomers selected from methyl methacrylate, butyl methacrylate, butyl acrylate and 2-ethylhexyl acrylate.

In preferred poly(meth)acrylate dispersions present in the coating compositions of the present invention, the poly(meth)acrylate comprises at least two (e.g. 2, 3 or 4) different (meth)acrylate monomers of formula (I). In preferred coating compositions, the poly(meth)acrylate optionally present comprises at least one monomer of formula (I) wherein $R^1$ is H and at least one monomer of formula (I) wherein $R^1$ is $CH_3$.

The poly(meth)acrylate dispersion optionally comprises chemical groups which enable self-crosslinking during drying as for example described in Journal of Coatings Technology and Research, September 2008, Volume 5, Issue 3, pp 285-297. Preferred poly(meth)acrylates present in the dispersions of the coating compositions of the present invention do not comprise self-cross linking groups.

The poly(meth)acrylate dispersion optionally present in the coating composition of the present invention may comprise one or more (e.g. 1, 2, 3, 4 or 5) (meth)acrylate polymers as hereinbefore described. Poly(meth)acrylate dispersions comprising 1 or 2, and more preferably 1, (meth)acrylate polymer are preferred.

Preferred poly(meth)acrylate dispersions present in the coating compositions of the present invention comprise a poly(meth)acrylate having a weight average molecular weight of 100,000 to 3,000,000, more preferably 150,000 to 2,500,000 and still more preferably 200,000 to 2,000,000.

The poly(meth)acrylate dispersion present in the coating composition of the present invention preferably comprises poly(meth)acrylate particles having an average diameter of 50-400 nm, more preferably 60-300 nm and still more preferably 70-200 nm, as determined by ISO 22412:2017 using a Malvern Zetasizer Nano S instrument.

The poly(meth)acrylate dispersion present in the coating composition of the invention preferably comprises 30-70 wt% poly(meth)acrylate particles and more preferably 40-60 wt%, based on weight of the dispersion. The dispersion may optionally comprise other conventional additives such as surfactants, preservatives and defoamers.

Poly(meth)acrylate dispersions suitable for use in the coating composition of the present invention may be purchased commercially. Alternatively, poly(meth)acrylate dispersions may be prepared by conventional polymerisation techniques known in the art.

Preferred compositions of the present invention comprise 5-40 wt%, more preferably 10-35 wt% and still more preferably 15-30 wt% of poly(meth)acrylate, based on the dry weight of polymer in the total weight of the composition. Other preferred compositions of the present invention comprise 10-80 wt%, more preferably 20-70 wt% and still more preferably 30-60 wt% of poly(meth)acrylate dispersion, based on the total weight of the composition.

Coalescent

The coating composition of the present invention preferably comprises less than 4 wt% coalescent, based on the total weight of the composition. More preferably the coating composition comprises 0-1.5 wt% coalescent, still more preferably 0-0.8 wt% coalescent and yet more preferably 0-0.5 wt% coalescent. Particularly preferred coating compositions of the invention are substantially free, e.g. free, of coalescent. This is advantageous as it reduces the TVOC of the coating composition which is particularly beneficial for decorative paints designed for application indoors. A coalescent has a boiling point above 250°C at 101.3 kPa as described in EU directive 2004/42/CE.

When present in the coating compositions of the present invention, the coalescent is preferably volatile at indoor application temperatures (i.e. >10 °C) so that it evaporates from the composition during the film-forming process and during drying and/or curing. Evaporation of the coalescent from the coating may, for example, continue for 3-4 months after application. Representative examples of suitable coalescents include ester alcohols (e.g. Texanol®), alcohols (e.g. ethanol, ispropyl alcohol), polyols and glycol ethers. Suitable coalescents are commercially available.

Solid, spherical filler particles

The coating compositions of the present invention comprise solid, spherical filler particles. The solid, spherical, filler particles are non-hollow. Thus preferably the particles have a substantially homogeneous composition throughout their structure. This helps to ensure that the filler particles retain their form during the manufacture of the coating composition as well as during application thereof. Preferably the solid, spherical, filler particles have a density of 0.9-3.0 $gcm^{-3}$, more preferably 1.0-2.75 $gcm^{-3}$, and still more preferably 2.0-2.7 $gcm^{-3}$, as determined by ISO 787-7:2009 part 10. This reflects the fact that the spherical filler particles are solid rather than hollow.

Preferably the solid, spherical filler particles present in the coating compositions of the invention are non-expandable and/or non-compressible at atmospheric conditions, i.e. 20 °C and 101.3 kPa. Preferably the solid, spherical filler particles have a Mohs hardness of 4-10 and more preferably 5-8, as determined by observing whether its surface is scratched by a substance of known or defined hardness (ranked relative Mohs scale 1-10, talc=1 and diamond=10). This is beneficial as it means that the solid spherical filler particles do not change shape and/or size during processing or during application of the coating composition to a surface. As discussed in more detail below, the specific combination of solid, spherical filler particles and lamellar filler particles with poly(meth)acrylate dispersion, is believed to yield the advantageous property profile (i.e. low VOC, matt finish, smooth surface, high stain penetration resistance and high polish resistance) achieved with the coatings of the present invention. It is therefore important that the form of the solid, spherical filler particles is maintained during manufacture and application.

The solid, spherical filler particles present in the coating compositions of the invention are substantially spherical and more preferably spherical. Preferably the solid, spherical filler particles have a particle diameter size, $D_{98}$ of 10 to 25 $\mu$m, more preferably 12 to 20 $\mu$m and still more preferably 15-20 $\mu$m, as determined by ISO 13320:2009 using a Malvern Mastersizer 2000. Preferably the solid, spherical filler particles have a particle diameter size, $D_{50}$ of 1 to 12 $\mu$m, more preferably 2 to 9 $\mu$m and still more preferably 4-8 $\mu$m, as determined by ISO 13320:2009 using a Malvern Mastersizer 2000. With larger spherical filler particles, the smoothness of the resulting coatings is reduced and this increases the friction and therefore reduces the washability, and therefore, the durability of the coatings.

The solid, spherical filler particles present in the coating compositions of the present invention may comprise organic or inorganic material. Preferably the solid, spherical filler particles comprise, or consist, of an inorganic material, preferably glass or ceramic, more preferably ceramic. Yet more preferably the solid, spherical filler particles comprise silicas (e.g. quartz, glass beads) and silicates (e.g. sodium aluminosilicate, sodium silicate). Particularly preferred solid, spherical filler particles comprise silicas and in particular aluminosilicate. Alkali aluminosilicates are particularly preferred, e.g. sodium aluminosilicate. Suitable solid, spherical filler particles are commercially available. For example alkali aluminosilicate ceramic microspheres may be obtained under the trade designation "ZEEOSPHERES W 210", from the 3M Company, St. Paul, Minn., USA. For example glass spheres (silicas) may be obtained under the trade designation Omicron NP5-P0, from Sovitec.

Optionally the solid, spherical filler particles are coated. The coating may, for example, decrease the surface tension or improve the compatibility with the organic binders present in the coating composition. Suitable surface-modification coatings are commercially available.

The amount of solid, spherical filler particles present in the coating compositions of the invention is preferably 1-35 wt%, based on total weight coating composition dry solids. More preferably the amount of solid, spherical filler particles present in the coating compositions of the present invention is 5-30 wt%, more preferably 10-30 wt% and still more preferably 15-27 wt%, based on total weight coating composition dry solids.

Lamellar filler particles

The coating compositions of the present invention comprise lamellar filler particles. The form of the lamellar filler particles is important. Filler particles exist in different forms: spherical, lamellar, nodular and irregular. The coating compositions of the present invention comprise spherical filler particles as discussed above, and lamellar filler particles. The lamellar filler particles are plate-like or flattened in shape. Preferably the lamellar particles are substantially planar. Preferred coating compositions of the present invention do not comprise nodular or irregular filler particles.

Preferred lamellar particles have a particle size $D_{50}$ of 1 to 25 microns, preferably 2 to 15 microns and still more preferably 3 to 10 microns as measured by ISO 13320:2009 using a Malvern Mastersizer 2000 as described in the Test Method description. Preferred lamellar particles have a particle size $D_{98}$ of 5 to 40 microns, preferably 10 to 30 microns and still more preferably 12 to 25 microns as measured by ISO 13320:2009 using a Malvern Mastersizer 2000 as described in the Test Method description.

The lamellar filler particles present in the coating compositions of the present invention preferably comprise inorganic material. Conventional inorganic filler materials may be used providing they are in lamellar form. Representative examples of suitable inorganic filler materials include mica, clays (e.g. layered silicates including phyllosilicates, smectite, hectorite, montmorillonite, and kaolin), talc and glass flakes. Preferred fillers include kaolin and talc. The most preferred

filler is talc. Suitable fillers are commercially available.

Optionally the lamellar filler particles are coated. The coating may, for example, decrease the surface tension or improve the compatibility with the organic binders present in the coating composition. Suitable surface-modification coatings are commercially available.

Preferably the lamellar filler particles have a density of 2.0-3.5 $gcm^{-3}$, more preferably 2.2-3.0 $gcm^{-3}$, and still more preferably 2.5-2.9 $gcm^{-3}$, as determined by ISO 787-7:2009 part 10. Preferably the lamellar filler particles have a Mohs hardness of 1-5 and more preferably 1-2, as determined by observing whether its surface is scratched by a substance of known or defined hardness (ranked relative Mohs scale 1-10, talc=1 and diamond=10). This is beneficial as it means that the lamellar filler particles do not change shape and/or size during processing or during application of the coating composition to a surface.

The amount of lamellar filler particles present in the coating compositions of the invention is preferably 0.5-25 wt%, based on total weight coating composition dry solids. More preferably the amount of lamellar filler particles present in the coating compositions of the present invention is 2-20 wt% and more preferably 5-17 wt%, based on total weight coating composition dry solids.

The specific combination of solid, spherical filler particles and lamellar filler particles is believed to yield the advantageous property profile (i.e. low VOC, matt finish, smooth surface, high stain penetration resistance and high polish resistance) of the coatings of the present invention. Thus in particularly preferred coating compositions of the present invention the amount of solid, spherical filler particles is 1-35 wt% and the amount of lamellar filler particles is 0.5-25 wt%, each based on total weight coating composition dry solids. More preferably the amount of solid, spherical filler particles is 10-30 wt% and the amount of lamellar filler particles is 2-20 wt% and still more preferably the amount of solid, spherical filler particles is 15-27 wt% and the amount of lamellar filler particles is 5-17 wt%, each based on total weight coating composition dry solids.

Other fillers

As described above filler particles exist in different forms: spherical, lamellar, nodular and irregular. The coating compositions of the present invention optionally comprise nodular and irregular filler particles. The nodular and irregular filler particles optionally present in the coating compositions of the present invention preferably comprise inorganic material.

Representative examples of suitable inorganic nodular and irregular filler materials include nepheline syenite, barium sulphate, calcium silicate, magnesium silicate, sodium silicate, feldspar, wollastonite (calcium metasilicate), wollastonite mixed with barium sulfate, calcium phosphate, magnesium phosphate perlite and other porous fillers having a low coefficient of thermal expansion (CTE), alumina, sodium metasilicate, magnesium metasilicate, calcium carbonate, dolomite, sintered glass frit, quartz glass powder, glass rods, glass whiskers, chopped glass, sodium titanate, silicon carbide, silicon nitride, polytitanocarbosilane, phosphate glass frit having a Tg of from 420 to 450 °C, MgO, and magnesia. Suitable nodular and irregular fillers are commercially available.

Optionally the nodular and irregular filler particles are coated. The coating may, for example, decrease the surface tension or improve the compatibility with the organic binders present in the coating composition. Suitable surface-modification coatings are commercially available.

The amount of nodular and/or irregular filler particles present in the coating compositions of the invention is preferably 0-30 wt%, based on the total weight of the coating composition dry solids. More preferably the amount of nodular and/or irregular filler particles present in the coating compositions of the present invention is 0-10 wt%, more preferably 0-5 wt%, and still more preferably 0 wt%.

Water

The coating compositions of the present invention are preferably waterborne. The water present in the coating compositions derives from the poly(meth)acrylate dispersion, which has an aqueous continuous phase, water present in other ingredients of the composition and water which is added to the overall mixture. The water added to the overall mixture forming the composition is preferably deionised water, or soft or pure tap water. Preferably the water added to the overall mixture has a hardness of less than 5 dH°.

Preferred coating compositions of the invention comprise at least 90 wt% water, based on the total weight of the solvent present in the coating composition. More preferred compositions comprise 95 to 100 wt% water, still more preferably 98-100 wt% water and yet more preferably 99 to 100 wt% water, based on the total weight of solvent present in the coating composition.

Preferred coating compositions of the invention comprise at least 25 wt% water, based on the total weight of the coating composition. More preferred compositions comprise 30-80 wt% water, still more preferably 35-75 wt% water and yet more preferably 40-70 wt% water, based on the total weight of the coating composition.

In further preferred coating compositions of the invention the amount of water added as pure water (as opposed to within, e.g. a dispersion or solution with another ingredient) is 5-50 wt%, more preferably 8-35 wt% and still more preferably 10-20 wt%, based on the total weight of the coating composition.

Optionally surfactants may be utilised to assist in the dispersion of the poly(meth)acrylate polymer in the water. Suitable surfactants include conventional anionic, cationic and non-ionic surfactants and mixtures thereof.

Organic Solvent

The coating compositions of the present invention optionally comprise an organic solvent. The organic solvent may derive from components present in the composition that are provided in solvents and/or from organic solvent added into the composition. The organic solvent is preferably volatile. Suitable organic solvents present in the compositions of the invention are commercially available.

Examples of suitable organic solvents and thinners are aromatic hydrocarbons such as xylene, toluene, mesitylene; ketones such as methyl ethyl ketone, methyl isobutyl ketone, methyl amyl ketone, methyl isoamyl ketone, cyclopentanone, cyclohexanone; esters such as butyl acetate, tert-butyl acetate, amyl acetate, isoamyl acetate, ethylene glycol methyl ether acetate, diethylene glycol n-butyl ether acetate, propylene glycol methyl ether acetate; ethers such as dipropylene glycol butyl ether, dipropylene glycol propyl ether, propylene glycol propyl ether, propylene glycol butyl ether, ethylene glycol monobutyl ether, diethylene glycol monobutyl ether, ethylene glycol dimethyl ether, diethylene glycol dimethyl ether, dibutyl ether, dioxane, tetrahydrofuran; alcohols such as 1-propanol, 2-propanol, n-butanol, isobutanol, benzyl alcohol, propylene glycol; ether alcohols such as butoxyethanol, 1-methoxy-2-propanol; ester alcohols such as 2,2,4-trimethyl-1,3-pentanediol monoisobutyrate (texanol), aliphatic hydrocarbons such as white spirit; and optionally a mixture of two or more solvents and thinners. Organic solvents that have a boiling point above 250°C at 101.3 kPa are also coalescents.

If an organic solvent is present it is preferably chosen from 2,2,4-trimethyl-1,3-pentanediol monoisobutyrate (Texanol®), isobutyl diesters (Coasol®), diethylene glycol monobutyl ether, propylene glycol and dipropylene glycol butyl ether.

The amount of organic solvent present in coating compositions of the present invention is preferably as low as possible as this minimizes the TVOC content. Preferably organic solvent is present in the coating compositions of the invention in an amount of 0-4.0 wt%, more preferably 0-2.0 wt% and still more preferably 0-0.5 wt% based on the total weight of the composition. The skilled man will appreciate that the organic solvent content will vary depending on the other components present.

Colour Pigments

The coating composition of the present invention preferably comprises one or more colour pigments to give colour and opacity. The pigments may be white pigments or non-white coloured pigments.

The pigments may be inorganic pigments, organic pigments or a mixture thereof.

Representative examples of suitable inorganic pigments include metal oxides (e.g. iron oxides, chrome oxides etc.), Complex Inorganic Colour Pigments (CICPs) (e.g. chromium and nickel titanate, cobalt blue and green azo), cadmium pigments, lead chromates, bismuth vanadate pigments, zinc sulfide, zinc oxide, titanium dioxide and carbon black.

Representative examples of classes of suitable organic pigments include azo pigments and polycyclic pigments. Azo pigments include monoazo yellow and orange pigments, disazo pigments, beta-naphthol pigments, naphthol AS pigments, azo pigment lakes, benzimidazolone pigments, disazo condensation pigments, metal complex pigments and isoindolinone and isoindoline pigments. Polycyclic pigments include phtalocyanine pigments (blue & green), quinacridone pigments, perylene and perinone pigments, thioindigo pigments, anthtaquinone pigments, dooxazine pigments, triarylcarbonium pigments, quinopthalone pigments and diketo-pyrrolo-pyrrol pigments.

Specific examples of non-white coloured pigments include iron oxides, zinc sulfide, chromium oxide green, cadmium pigments, naphthol red, phthalocyanine compounds (e.g. phthalocyanine green, phthalonitrile blue), ultramarine blue azo pigments and carbon black. An example of a white pigment is titanium dioxide. A huge range of suitable pigments are commercially available.

During preparation of the coating composition of the present invention the pigment may be ground and mixed with the other components present therein. This method provides coating compositions having a ready-made colour. Alternatively, the pigment may be added to the coating composition after all of the other components of the composition have been mixed together in a post-addition step. This process is often referred to as tinting.

Preferably the total amount of colour pigment present in the compositions of the invention is 0.5-40 wt%, more preferably 1-35 wt% and still more preferably 2-30 wt%, based on the total weight of the composition. The skilled man will appreciate that the pigment content will vary depending on the other components present and the end use of the

coating composition.

Rheology Modifiers

The composition of the invention preferably comprises a rheology modifier. Still more preferably the composition of the invention further comprises a mixture of at least 2 and more preferably at least 3 rheology modifiers. The presence of rheology modifier in the compositions of the invention advantageously improves the storage stability, the body of the coating composition and the application properties of the coating.

The rheology modifier present in the coating compositions of the invention is preferably a polysaccharide rheology modifier, an associative rheology modifier, a clay or a mixture thereof. Cellulosic rheology modifiers (e.g. hydroxyethyl cellulose) may also be used. Particularly preferred compositions of the invention comprise a mixture of associative rheology modifiers and clay.

Exemplary polysaccharide rheology modifiers for use in the coating compositions include alginin, guar gum, locust bean gum and xanthan gum.

Exemplary clay rheology modifiers for use in the coating compositions of the invention include kaolin clay, smectite clay, illite clay, chlorite clay, synthetic clay or organically modified clay. Preferred clay rheology modifiers are synthetic clay or an organically modified clay.

Exemplary associative rheology modifiers for use in the coating compositions include non-ionic synthetic associative rheology modifier (niSAT), hydrophobically modified ethoxylated urethanes (HEUR), hydrophobically modified alkali-swellable emulsions (HASE), and styrene-maleic anhydride terpolymers (SMAT). Acidic acrylate copolymers (cross-linked) of ethyl acrylate and methacrylic acid, and acrylic terpolymers (cross-linked) of ethyl acrylate, methacrylic acid, and non-ionic urethane surfactant monomer may also be used as associative rheology modifiers. Particularly preferred associative rheology modifiers present in the coating compositions of the invention are hydrophobically modified ethoxylated urethanes (HEUR) and hydrophobically modified alkali-swellable emulsions (HASE). Particularly preferred compositions of the invention comprise a mixture of hydrophobically modified ethoxylated urethanes (HEUR) and hydrophobically modified alkali-swellable emulsions (HASE). When one or more suitable associative rheology modifiers are used, the thickening reaction is caused in part by either association between the associative rheology modifier and at least one other particle of the coating composition (e.g., a pigment particle or polymer particle) or another associative rheology modifier molecule.

Preferred compositions of the invention comprise 0.05 to 5.0 wt% rheology modifier and still more preferably 0.1-3.0 wt% rheology modifier, based on the total weight of the composition.

Foam control agent

The coating compositions of the present invention preferably comprise a foam control agent. Foam control agents are sometimes also referred to as defoamers. A wide range of foam control agents are commercially available, and may be used in the coating compositions of the invention. Representative examples of suitable foam control agents include organic siloxanes, polyethers, polyether-modifed silicones, mineral oils and combinations thereof.

Preferred coating compositions of the invention comprise 0.05-1.0 wt% foam control agent and more preferably 0.1-0.7 wt% foam control agent, based on the total weight of the composition.

Biocides

The terms biocide, antimicrobial agent, biologically active compounds, film preservative, in can preservative and toxicant is used in the industry to describe known compounds that act to prevent biological growth, e.g. growth of mould, algae, bacteria and the like. The biocide may be inorganic, organometallic or organic. Preferred biocides present in the compositions of the invention are organic agents. Suitable biocides are commercially available.

The coating compositions of the present invention optionally comprise in can preservative (PT 6), dry film biocide (PT 7) and/or wood preservatives (PT 8). Mixtures of different biocides may also be employed. Preferred compositions of the present invention comprise at least one in can preservative. If the coating composition is designed for use in rooms such as bathrooms, wet rooms and/or shower rooms, it is preferred that the compositions of the present invention comprise at least one dry film biocide and one in can preservative. It should be noted here that some compounds perform more than one of these functions.

Representative examples of suitable in can preservatives that may be present in the coating compositions of the present invention include:

Isothiazolines: Reaction mass of 5-chloro-2-methyl-4-isothiazolin-3-one and 2-methyl-2H-isothiazol-3-one (3:1) (CIT/MIT) (PT6, 0.0001-0.01% (1-100 ppm)); 5-chloro-2-methyl-4-isothiazolin-3-one (CIT) (PT6, 0.0001-0.01%

(1-100 ppm)); 2-Methyl-4-isotiazolin-3-one (MIT)(PT6, 0.0001-0.05 (1-500 ppm)); 2-Methyl-1,2-Benzisothiazol-3(2H)-one (MBIT)(PT6, 0.0001-0.05 (1-500 ppm)); 1,2-Benzisothiazolin-3-one (BIT)(PT6, 0.0001-0.05 (1-500 ppm)); 2-Octyl-2H-isothiazol-3-one (OIT)(PT6, 0.0001-0.5% (1-5000 ppm)); 2-butyl-benzo[d]isothiazol-3-one (BBIT)(PT6, 0.0001-0.5% (1-5000 ppm));

Amides/Ureas: Benzamide, 2,2'-dithiobis (DTBMA)(PT6, 0.0001-0.05% (1-500 ppm)), 2,2-dibromo-2-cyanoacetamide (DBNPA)(PT6, 0.0001-0.05% (1-500 ppm));

Pyrithiones: Zinc pyrithione (ZnPT)(PT6, 0.0001-0.05% (1-500 ppm)); Sodium pyrithione (NaPT)(PT6, 0.0001-0.05% (1-500 ppm));

Organohalogens: 2-Bromo-2-nitro-1,3-propanediol (Bronopol)(PT6, 0.001-0.05% (1-500 ppm);

Carbamates: 3-iodo-2-propynylbutylcarbamate (IPBC)(PT6, 0.01-0.5% (100-5000 ppm));

Silver chemistry: Reaction mass of titanium dioxide and silver chloride (PT6, 0.0001-0.5% (1-5000 ppm)); and

Formaldehyde donor/$CH_2O$ adducts: N,N-Methylenebismorpholine (MBM)(PT6, 0.0001-0.5% (1-5000 ppm)); (ethylenedioxy)dimethanol (EDDM) (PT6, 0.0001-0.5% (1-5000 ppm)); α, α', α"-trimethyl-1,3,5-triazine-1,3,5(2H,4H,6H)-triethanol (HPT); 3,3'-methylenebis[5-methyloxazolidine] (Oxazolidin/MBO) (PT6, 0.0001-0.5% (1-5000 ppm)); Sodium N-(hydroxymethyl)glycinate; Tetrahydro-1,3,4,6-tetrakis(hydroxymethyl)imidazo[4,5-d]imidazole-2,5(1H,3H)-dione (TMAD)(PT6, 0.0001-0.5% (1-5000 ppm)); Tetrakis(hydroxymethyl)phosphonium sulphate(2:1) (THPS) (PT6, 0.0001-0.5% (1-5000 ppm)); Methenamine 3-chloroallylochloride (CTAC)(PT6, 0.0001-0.5% (1-5000 ppm)); 2,2',2"-(hexahydro-1,3,5-triazine-1,3,5-triyl)triethanol (HHT)(PT6, 0.0001-0.5% (1-5000 ppm)); 1,3-bis(hydroxymethyl)-5,5-dimethylimidazolidine-2,4-dione (DMDMH)(PT6, 0.0001-0.5% (1-5000 ppm)); 7a-ethyldihydro-1H,3H,5H-oxazolo[3,4-c]oxazole (EDHO)(PT6, 0.0001-0.5% (1-5000 ppm)); cis-1-(3-chloroallyl)-3,5,7-triaza-1-azoniaadamantanechloride (cis CTAC)(PT6, 0.0001-0.5% (1-5000 ppm)); (benzyloxy)methanol(PT6, 0.0001-0.5% (1-5000 ppm)).

Representative examples of suitable dry film biocides that may be present in the coating compositions of the present invention include:

Isothiazolines: 4,5-Dichlor-2-n-octyl-4-isotiazolin-3-one (DCOIT)(PT7, 0.05-0.2% (500-2000 ppm); 2-Octyl-2H-isothiazol-3-one (OIT)(PT7, 0.1-0.4% (1000-4000 ppm)); 2-butyl-benzo[d]isothiazol-3-one (BBIT)(PT7, 0.0001-0.5% (1-5000 ppm)); 2-thiazol-4-yl-1H-benzoimidazole (Thiabendazole)(PT7, 0.01-0.5% (100-5000 ppm));

Azoles: Methyl (E)-2-{2-[6-(2-cyanophenoxy)pyrimidin-4-yloxy]phenyl}-3-methoxyacrylate (Azoxystrobin)(PT7, 0.01-0.5% (100-5000 ppm)); 1-[[2-(2,4-dichlorophenyl)-4-propyl-1,3-dioxolan-2-yl]methyl]-1H-1,2,4-triazole (Propiconazole)(PT7, 0.01-0.5% (100-5000 ppm)); 1-(4-chlorophenyl)-4,4-dimethyl-3-(1,2,4-triazol-1-ylmethyl)pentan-3-ol (Tebuconazole)(PT7, 0.01-0.5% (100-5000 ppm));

Amides/Ureas: 3-(3,4-dichlorophenyl)-1,1-dimethylurea (Diuron)(PT7, 0.1-1.0% (1000-10,000 ppm)); 3-(4-Isopropylphenyl)-1,1-dimethylurea (Isoproturon)(PT7, 0.01-0.5% (100-5000 ppm))

Pyrithiones: Zinc pyrithione (ZnPT)(PT7, 0.0001-0.05% (1-500 ppm)); Sodium pyrithione (NaPT)(PT7, 0.0001-0.05% (1-500 ppm));

Organohalogens: 4-(2,2-difluoro-1,3-benzodioxol-4-yl)-1H-pyrrole-3-carbonitrile (Fludioxonil)(PT7, 0.01-0.5% (100-5000 ppm)); Dichloro-N-[(dimethylamino)sulphonyl] fluoro-N-(ptolyl)methanesulphenamide (Tolylfluanid)(PT8, 0.01-0.5% (100-5000 ppm));

Carbamates: 3-iodo-2-propynylbutylcarbamate (IPBC)(PT7, 0.05-0.5% (500-5000 ppm)); Methyl 2-benzimidazoie carbamate (Carbendazim)(PT7, 0.01-0.5% (100-5000 ppm))

Silver chemistry: Reaction mass of titanium dioxide and silver chloride (PT7, 0.0001-0.5% (1-5000 ppm)); Silver copper zeolite (PT7, 0.0001-0.5% (1-5000 ppm)); Silver nitrate (PT7, 0.0001-0.5% (1-5000 ppm)); Silver phosphate glass (PT7, 0.0001-0.5% (1-5000 ppm)); Silver sodium hydrogen zirconium phosphate (PT7, 0.0001-0.5% (1-5000 ppm)); Silver zeolite (PT7, 0.0001-0.5% (1-5000 ppm)); Silver zinc zeolite (PT7, 0.0001-0.5% (1-5000 ppm)); and

Triazines: (4E)-4-(Ethylimino)-N-(2-methyl-2-propanyl)-6-(methylsulfanyl)-1,4-dihydro-1,3,5-triazin-2-amine (Terbutryn)(PT7, 0.1-0.3% (1000-3000 ppm)).

Representative examples of suitable wood preservatives that may be present in the coating compositions of the present invention include:

Isothiazolines: 4,5-Dichlor-2-n-octyl-4-isotiazolin-3-one (DCOIT)(PT8, 0.01-0.5% (100-5000 ppm); 2-Octyl-2H-isothiazol-3-one (OIT)(PT8, 0.0001-0.5% (1-5000 ppm)); 2-thiazol-4-yl-1H-benzoimidazole (Thiabendazole)(PT8, 0.01-0.5% (100-5000 ppm));

Azoles: 1-[[2-(2,4-dichlorophenyl)-4-propyl-1,3-dioxolan-2-yl]methyl]-1H-1,2,4-triazole (Propiconazole)(PT8, 0.01-0.5% (100-5000 ppm)); 1-(4-chlorophenyl)-4,4-dimethyl-3-(1,2,4-triazol-1-ylmethyl)pentan-3-ol (Tebuconazole)(PT8, 0.01-0.5% (100-5000 ppm));

Organohalogens: Dichloro-N-[(dimethylamino)sulphonyl] fluoro-N-(ptolyl)methanesulphenamide (Tolylfluanid)(PT8, 0.01-0.5% (100-5000 ppm)); and
Carbamates: 3-iodo-2-propynylbutylcarbamate (IPBC)(PT8, 0.01-0.5% (100-5000 ppm)).

Preferably the total amount of biocide present in the compositions of the invention is 0.01-2.0 wt%, more preferably 0.05-1.5 wt% and still more preferably 0.1-1.0 wt%, based on the total weight of the composition. It should be understood that the optimal amount of biocide varies depending on which type and/or combination of biocide is employed.

Dispersing agent

The coating compositions of the present invention preferably comprise a dispersing agent. Dispersing agents are added to disperse and stabilize pigments and fillers in the coating composition. Dispersing agents are often also referred to as surfactants or wetting agents. A wide range of dispersing agents is commercially available, and may be used in the coating compositions of the invention. Suitable dispersing agents include conventional anionic, cationic, non-ionic and amphoteric dispersing agents as well as combinations thereof. Preferably a mixture of dispersing agents is used.
Preferred coating compositions of the invention comprise 0.05-1.0 wt% dispersing agent and more preferably 0.1-0.6 wt% dispersing agent, based on the total weight of the composition.

Additives

The coating composition of the present invention preferably comprises one or more other additives. Examples of other components that can be added to the coating composition are pH adjuster/neutralizing agent (e.g. ammonia, 2-aminopropanol, NaOH), binders (e.g. polyurethanes, silicones, fluoropolymers, polystyrene, polyvinyl (e.g. polyvinyl acetate) and polyolefins), waxes, adhesion promotors, flash rust inhibitors, anticorrosion agents, substrate wetting agents, reinforcing agents, anti-static agents, flame retardant agents, lubricants, light stabilisers (e.g. hindered amine light stabilisers), UV absorbents, odor scavengers, formaldehyde scavengers and plasticizers.
Preferably the total amount of additives present in the compositions of the invention is an amount of 0-5.0 wt%, more preferably 0-3.0 wt% and still more preferably 0-2.0 wt%, based on the total weight of the composition.

Composition

A preferred coating composition of the present invention comprises:

(i) 10-80 wt% of a poly(meth)acrylate dispersion, wherein said poly(meth)acrylate has a minimum film formation temperature (MFFT) of 5 °C or less;
(ii) 1-35 wt% solid, spherical filler particles having a $D_{98}$ of less than 25 $\mu$m, based on total weight coating composition dry solids;
(iii) 0.5-25 wt% lamellar filler particles, based on total weight coating composition dry solids;
(iv) water;
(v) 0-40 wt% colour pigment;
(vi) 0-5.0 wt% rheology modifier;
(vii) 0-1.0 wt% foam control agent;
(viii) 0-2.0 wt% biocide;
(ix) 0-1.0 wt% dispersing agent; and
(x) 0-5.0 wt % additives,

wherein the composition comprises a higher weight % of said solid, spherical filler particles than said lamellar filler particles.
A further preferred coating composition of the present invention comprises

(i) 10-80 wt% of a poly(meth)acrylate dispersion, wherein said poly(meth)acrylate has a minimum film formation temperature (MFFT) of 5 °C or less;
(ii) 1-35 wt% solid, spherical filler particles having a $D_{98}$ of less than 25 $\mu$m, based on total weight coating composition dry solids;
(iii) 0.5-25 wt% lamellar filler particles, based on total weight coating composition dry solids;
(iv) water;
(v) 0.5-40 wt% colour pigment;

(vi) 0.05-5.0 wt% rheology modifier;
(vii) 0.05-1.0 wt% foam control agent;
(viii) 0.01-2.0 wt% biocide;
(ix) 0.05-1.0 wt% dispersing agent; and
(x) 0-2.0 wt % additives,

wherein the composition comprises a higher weight % of said solid, spherical filler particles than said lamellar filler particles.

A still further preferred coating composition of the present invention comprises

(i) 10-80 wt% of a poly(meth)acrylate dispersion, wherein said poly(meth)acrylate has a minimum film formation temperature (MFFT) of 5 °C or less;
(ii) 1-35 wt% solid, spherical filler particles having a $D_{98}$ of less than 25 $\mu$m, based on total weight coating composition dry solids;
(iii) 0.5-25 wt% lamellar filler particles, based on total weight coating composition dry solids;
(iv) water;
(v) 0.5-40 wt% colour pigment;
(vi) 0.05-5.0 wt% rheology modifier;
(vii) 0.05-1.0 wt% foam control agent;
(viii) 0.01-2.0 wt% biocide;
(ix) 0.05-1.0 wt% dispersing agent;
(x) 0-2.0 wt % additives; and
(xi) 0-4 wt% coalescent,

wherein the composition comprises a higher weight % of said solid, spherical filler particles than said lamellar filler particles.

Preferred coating compositions of the invention have a gloss of less than 10, more preferably less than 6, at an angle of 60°, e.g. as tested by the method set out in the examples, when present as a coating on a surface.

Preferred coating compositions of the invention have a gloss of less than 10, more preferably less than 9, at an angle of 85°, e.g. as tested by the method set out in the examples, when present as a coating on a surface.

Further preferred coating compositions of the invention have a difference in gloss of ±8.0 and more preferably ±4.0, when measured at angles of 60° and 85°, as set out in the examples, when present as a coating on a surface.

Preferred coating compositions of the invention have a volatile organic content (VOC) of less than 30 g/L, more preferably less than 10 g/L, most preferably less than 5 g/L. The VOC may be as low as 0.1 or 0.5 g/L. The VOC is calculated as described in the examples section herein. Although not applied, VOC can also be determined by analysing the coating composition according to ISO 11890-2:2013. From the analytical measurement data the VOC content is calculated in g/L. The density of the coating composition is measured with the appropriate density determination method (ISO 2811-1:2016). The low VOC of the coating compositions of the invention is environmentally beneficial and makes the coating compositions more pleasant to use, particularly in interior environments.

Further preferred coating compositions of the invention have a total volatile organic content (TVOC) of less than 50 g/L, more preferably less than 20 g/L, most preferable less than 5 g/L. The TVOC may be as low as 1 g/L. The TVOC is calculated according to the method described in the examples section herein. Although not applied, TVOC can also be determined by analysing the coating composition according to ISO 11890-2:2013. From the analytical measurement data the TVOC content is calculated in g/L. The density of the coating composition is measured with the appropriate density determination method (ISO 2811-1:2016).

Preferred coating compositions of the invention have a pigment volume concentration (PVC) of 25-50 %, more preferably 30-47 % and still more preferably 35-45 %. PVC is calculated as described in the examples section herein.

Preferred coating compositions of the invention have a Stormer viscosity of 80-140 KU, more preferably 90-135 KU and still more preferably 100-130 KU. The Stomer viscosity is measured as described in the examples.

Further preferred coating compositions of the invention have a Cone and Plate viscosity of 50-600 mPa.s (50-600 cP), more preferably 70-400 mPa˙s (70-400 cP) and still more preferably 90-300 mPa˙s (90-300 cP). The Cone and Plate viscosity is measured as described in the examples.

Thus further preferred coatings compositions of the present invention comprise:

(i) a poly(meth)acrylate dispersion;
(ii) filler particles, preferably solid, spherical filler particles and lamellar filler particles; and
(iii) water,

wherein said composition has:

(e) a VOC of less than 30 g/L, preferably 0-10 g/L;
(f) a TVOC of less than 50 g/L, preferably 0-20 g/L;
(g) a Stormer viscosity of 80-140 KU, preferably 90-135 KU; and
(h) a Cone and Plate viscosity of 50-600 mPa˙s (50-600 cP),

preferably 70-400 mPa˙s (70-400 cP).

Manufacture and containers

The present invention also relates to a method of preparing the composition as hereinbefore described wherein the components present in the composition are mixed. Any conventional production method may be used.

The composition as described herein may be prepared in a suitable concentration for use, e.g. in brush or rolling application. Alternatively, the composition may be a concentrate. In this case, further solvent, typically water, is added to the composition described herein to form the final coating composition. After mixing, and optionally after addition of solvent, e.g. water, the coating composition is preferably filled into a container. Suitable containers include cans, drums and tanks.

The coating composition is preferably supplied as a one-pack. Thus the composition is preferably supplied in a ready-mixed or ready to use form. Optionally the one-pack product may be tinted with pigments prior to application. When a tinter is used, preferably the tinter has a low VOC content so that it does not significantly increase the VOC and TVOC of the final coating composition.

Coatings and Substrates

The coating composition of the invention may be applied to a whole or part of any surface or article. The coating composition of the invention advantageously improves the aesthetic appearance of the surface. Preferred coatings of the invention have a gloss, as determined by the method set out in the examples, of less than 10, preferably less than 6, at an angle of 60°. Preferred coatings of the invention have a gloss, as determined by the method set out in the examples, of less than 10, preferably less than 9, at an angle of 85°. These low gloss levels (i.e. matt finish) are highly desirable. Further preferred coatings of the invention have a difference in gloss, as determined by the method set out in the examples, of ±8.0 and more preferably ±4.0, when measured at angles of 60° and 85°. This ensures that the look of the coating is consistent, regardless of the viewing angle.

Preferred coatings of the invention have a kinetic friction of less than 0.70, more preferably 0-0.65 and still more preferably 0-0.60, as determined by the method set out in the examples.

Preferred coatings of the invention have a polish %, as measured at 60° according the method described in the examples, of less than 5 %, more preferably 0-4 % and still more preferably 0-3 %.

Preferred coatings of the invention have a polish %, as measured at 85° according the method described in the examples, of less than 35, more preferably 0-29 % and still more preferably 0-25 %.

Preferred coatings of the invention are stain penetration resistant to coffee, as measured according to the method of the examples. Preferred coatings of the invention are stain penetration resistant to red wine, as measured according to the method of the examples.

Advantageously the coating composition of the present invention provides a matt finish without compromising on the stain penetration resistance, polish resistance or smoothness of the surface meaning that the coatings are durable and washable.

Thus further preferred coatings of the present invention comprise a poly(meth)acrylate and filler particles, preferably solid, spherical filler particles and lamellar filler particles, and said coating:

(f) has a gloss of less than 10, preferably less than 6, at an angle of 60°;
(g) has a gloss of less than 10, preferably less than 9, at an angle of 85°;
(h) a kinetic friction of less than 0.70, preferably less than 0.65;
(i) a polish % of less than 5, preferably less than 4, as measured at 60°; and
(j) a polish % of less than 35, preferably less than 29, as measured at 85°.

Further preferred coatings are stain penetration resistant to coffee and/or red wine.

Application of the coating composition may be accomplished by any convenient means, e.g. via painting with a brush or roller, onto the surface or article. Preferably therefore the method of providing a coating on a surface, comprises: (i) applying a composition as hereinbefore described; and (ii) allowing the composition to dry and/or to cure to form a

coating on the surface. An advantage of the compositions of the present invention is that they are self-drying, i.e. they dry and/or cure at ambient conditions, typically from 5 to 40 °C.

The coating composition, once dried, forms a coating or film. The coating or film of the present invention therefore comprises the composition as hereinbefore described but with little, or no, water content or organic solvent. Alternatively defined, the coating or film of the present invention is derived from or obtainable from (e.g. obtained from) the composition as hereinbefore defined by drying and/or curing. The coating or film formed preferably has a dry film thickness per coat of 20-90 μm, more preferably 20-60 μm and still more preferably 30-50 μm.

Suitable substrates that may be coated with the coating composition herein described include plaster, plasterboard, wood, wooden based materials (e.g. MDF, chipboard) metal, stone, plastic, natural and synthetic fibres, glass, ceramics, concrete, leather, paper (e.g. wall paper), glass fiber wall covering, foam or masonry. Preferably the substrate is plaster, plasterboard, wood, wooden based materials (e.g. MDF, chipboard), concrete, wall paper and glass fiber wall covering.

The coating composition of the present invention is particularly suited for application to surfaces that are typically in an indoor environment. Preferably, therefore, the coating composition of the invention provides an interior coating. Representative examples of surfaces or articles that may be coated with the coating composition described herein include walls, ceilings, woodwork etc.

The coating composition of the present invention may be applied directly to a surface of a substrate. In other words the surface of the substrate is not pre-coated with a primer coating. The coating composition may be applied directly to a surface of a substrate as a single coat or a plurality of coats, e.g. two, three or four coats and preferably as two coats.

Alternatively the coating composition of the present invention may be applied in a coating system. In this case, a primer is preferably applied on the substrate. The coating composition according to the invention is preferably applied on top of the primer as one, two or three coats, preferably two coats.

The invention will now be described by the following non-limiting examples.

EXAMPLES

**Materials**

The polymers used in the examples are summarised in the table below. They are all commercially available.

Table 1. Properties of the polymers used

| Ingredient | MFFT (°C) | Tg (°C) | Self crosslinkable | Need coalescent | Particle size (nm) | Solid content (wt% in water) | Density (g/cm³) | Comments |
|---|---|---|---|---|---|---|---|---|
| Poly(meth)acrylate dispersion I | < 5 | 6 | No | No | 126 | 46±0.5 | 1.06 | No ammonia odor |
| Styrene acrylic dispersion | 0 | -10 | No | No | 88 | 50±1 | 1.05 | Ammonia odor |
| Poly(meth)acrylate dispersion II | 14 | 20 | No | Yes | 128 | 45.5±0.5 | 1.06 | Ammonia odor |
| Polyvinyl acetate dispersion | 0 | 12 | No | No | 370 | 53±1 | 1.07 | Ammonia odor |

The compounds used in the examples are summarised below in Tables 2 and 3. The compounds are all commercially available.

Table 2. List of materials used

| Ingredient | Description | Density ($g/cm^3$) | Solid content (wt%) |
|---|---|---|---|
| $TiO_2$ | Colour Pigment | 4.00 | 100 |
| Dispersing agents | Dispersing agents | 1.06 | 40 (in water) |
| Rheology modifiers | Mix of high, mid and low shear rheology modifiers | 1.05 | 19 (in water) |
| Foam control agents | Polysiloxane additives | 1.10 | 100 |
| Biocide | In-can preservative | 1.08 | 26 (in water) |
| Texanol | Coalescent | 0.95 | 0 |

Table 3. Properties of solid spherical filler particles, nodular filler particles and lamellar filler particles

| Trade name | Type | Shape | Part. size $D_{50}$ (μm) | Part. size D98 (μm) | Mohs hardness | Density ($g/cm^3$) |
|---|---|---|---|---|---|---|
| Micro Talc IT Extra | Talc | Lamellar | 5.7 | 16.4 | 1 | 2.77 |
| Belcatalc | Talc | Lamellar | 7.9 | 23.0 | 1 | 2.75 |
| Speswhite | Kaolin | Lamellar | 3.5 | 14.5 | 1-2 | 2.60 |
| Microdol 1 | Dolomite | Nodular | 7.5 | 24.7 | 3.5 | 2.85 |
| Microdol 10D | Dolomite | Nodular | 10.5 | 35.0 | 3.5 | 2.85 |
| Zeeospheres W-210 (3M) | Ceramic (solid) | Inorganic sphere | 6.9 | 17.5 | 6 | 2.40 |
| Zeeospheres W-410 (3M) | Ceramic (solid) | Inorganic sphere | 9.5 | 27.8 | 6 | 2.40 |
| Zeeospheres W-610 (3M) | Ceramic (solid) | Inorganic sphere | 13.7 | 45.3 | 6 | 2.40 |
| Omicron NP5-P0 | Glass (solid) | Inorganic sphere | 7.0 | 23.2 | 6 | 2.50 |

**General procedure for the preparation of coating compositions**

The components of the coating compositions were mixed in the proportions set out in Tables 4-10 below. A number of comparative examples were also prepared.

The coating compositions were prepared using a dissolver and a let-down. The titanium dioxide, lamellar and nodular filler particles were dispersed in a mill base using a dissolver. The mill base consisted of water, high shear rheology modifier, foam control agents and dispersing agents. The solid spherical filler particles were added to the dissolver at lower speed after the dispersion process was finished. Water was included in the let-down and also added during the paint manufacturing process. The rest of the ingredients were added and mixed at lower speed in a let-down. 1L of each composition was made.

The VOC and TVOC are calculated as described in the Test Method section.

**Test Methods**

**• Determination of particle size of fillers ($D_{98}$ and $D_{50}$)**

$D_{98}$ and $D_{50}$ were determined according to ISO 13320 by using a Mastersizer 2000, with a Hydro G dispersion

unit.

Samples were collected from thoroughly mixed containers using a spoon. Particle size measurements were obtained on a Mastersizer 2000 instrument using a Hydro G dispersion unit with water (23°C) as dispersing agent. Samples were manually pre-dispersed in a small beaker by using a pipette before being added to the Hydro G. Kaolin, Zeeospheres and Omicron NP5-P0was pre-dispersed in water, while talc was pre-dispersed in 70% EtOH. Samples were added to the Hydro G until 5-15% obscuration was reached. During measurement 20% ultrasound was applied continuously and the stirrer/pump speed was set to 2400 rpm. The samples were analyzed in manual mode and measurement duration set to 10 seconds. Consecutive measurements were made until stable results were achieved. The results for the lamellar and nodular fillers were analyzed by applying the following additional settings: Particle type non-spherical, refractive index and absorption as specified for kaolin and talc in Mastersizer software and analysis model general purpose. The results for the spherical fillers were analyzed by applying the following additional settings: Particle type spherical, refractive index = 1.52, absorption = 0.0 and analysis model general purpose.

The Mastersizer 2000 instrument is annually calibrated with latex beads by a Malvern representative. A reference material is regularly measured to ensure that the calibration is still valid.

• Determination of the shape of fillers using Scanning Electron Micsoscopy

The shape of the fillers was determined from pictures by SEM-analysis. The instrument used was a Hitachi SU3500. 10-50 mg of filler sample was mixed with 100 mL ethanol. The solution was put into an ultrasound where it was stirred in order to make a homogenous dispersion of the particles. The solution was pumped through a filter which had previously been wetted by 20 mL ethanol. The filter was an Isopore™ Membrane Filters-ATTP. The filter containing filtrated filler particles was dried for one hour in room temperature before SEM-EDS was used to analyse the filler particles directly on the filter. The working distance was 8 mm, spot intensity 50-60, accelerate voltage 15 kV, variable pressure mode was 30 Pa and image type was BSE with composition mode.

• Gloss measurements at various angles

The gloss at various angles was determined according to NS-EN ISO 2813. A stationary BYK-micro-tri-gloss instrument was used. The paint compositions were applied on glass panels using a 100 μm applicator and dried at room temperature with a fan for 15 minutes and at 50°C for 15 minutes. The glass panels were cooled at ambient temperature for 1 hour before the gloss was measured. Values for 60° and 85° are reported as an average of three measurements.

• Determination of the dynamic viscosity of paints, Cone and Plate viscosity

The viscosity of the coating compositions was determined according to ISO 2884-1:2006 using a Cone and Plate viscometer set at a temperature of 23 °C, working at a shear rate of 10000 $s^{-1}$, providing a viscosity measurement range of 0-10 P. The result given is the average of three measurements. A Brookfield CAP 1000+ Viscometer with spindle CAP02 was used.

• Determination of paint consistency using Stormer-type viscometer

The consistency of the coating compositions was determined according to ASTM D562-10(2014) Method B using a digital Stormer-type viscometer. The measurement was done on samples in a 250 mL container at 23°C.

• Determination of the density of the coating compositions

The density of the coating compositions was determined according to ISO 2811-1 :2016 using a metal pycnometer at 23°C. The measurement was done on samples in a 100 mL container.

• Stain Penetration (coffee and red wine)

The ability of a coating to resist penetration of fluids, specifically coffee and red wine, was tested on glass panels. The coating compositions were applied on transparent glass panels using a 100 μm applicator and dried for 28 days at climatic conditions (23°C/50% RH).

Stains (coffee and red wine) were applied with a pipette at the coating surface (1 × 6 cm). The stains were left for 15 minutes before rinsing off with flowing water for 20 seconds (temperature approximately 25°C). JIF kitchen detergent was applied. After 1 min the JIF kitchen detergent was rinsed off using flowing water.

The coating was dried for 24 hours at 23 °C before evaluating the stain penetration by inspecting the backside

of the glass panels. The panel was placed on a white surface during evaluation. The stain penetration is reported according to the following scale:

0 = no stain penetration
1 = small trace of stain penetration
2 = major traces of stain penetration

Stain and cleaning detergents specifications:

Coffee: Nescafe Gold (2.3 g dissolved in 150 g hot water). Coffee testing temperature: 20 °C.
Red Wine: Falling Feather Ruby Cabernet (USA, California)
Cleaning detergent: JIF Kjøkken

• Determination of kinetic coefficient of friction

The kinetic coefficient of friction of coatings was determined according to a modification of standard ASTM D1894-14 using a Coefficient of Friction COF-500 instrument. The coating compositions were applied on Leneta black scub test panels (P121-10N) using a 100 μm applicator. The coating films were dried for 28 days in climatic conditions (23°C/50% RH). Duplicates were made for all compositions.
The deviation from ASTM D1894-14 is the use of a microfiber kitchen cloth (Type:"Vaffel" from KID Interior/ 80% polyester/20% polyamide) mounted on the sled instead of the sponge rubber as described in the standard.
The lower kinetic value the smoother the surface measured.

• Polish Resistance

The polish resistance of the coating was determined by applying the coating compositions on Leneta panels (P121-10N) using a 200 μm applicator. The coatings were dried for 28 days in climatic conditions (23°C/50% RH). Duplicates were made for all compositions.
Gloss was measured (at 60° or 85°) at five places on the films according to NS-EN ISO 2813 with a portable BYK-micro-tri-gloss instrument. The position for measurement was marked at the panels. The polish test was done with an Abrasion Scrub tester machine (Elcometer 1720 Abrasion Tester). A knit cloth (Type:"Fin strikket klut" from KID Interior/ 100% cotton) wetted with water and squeezed (no dripping water from the cloth) was mounted at the universal clamp and the washing arm was added, 1400 g total weight. 5 mL water was spread in the washing zone and the test block was allowed to pass 50 times over the test surface. After the testing, the panel was dried for 24 hours at 23 °C before measuring the gloss. No cloth or paper was used to dry the panel.
The gloss after washing was measured at the same five places of the films as before the testing.
This method evaluates the ability of a dry coating to resist an increase in gloss value caused by a wet cloth and the test results are reported as percentage gloss increase.

$$\%\, Change = \frac{final\ 85°gloss - initial\ 85°\ gloss}{initial\ 85°\ gloss}$$

• Calculating PVC and vol% solids

According to ISO 4681/1 the PVC refers to the ratio of the volume of pigment and other solids particles in a product to the total volume of the non-volatile matter.
In order to be able to calculate the Pigment Volume Concentration (PVC) of a coating from a formulation expressed in proportions by weight, the non-volatile content and density of every component of the coating material is required. From these parameters the approximate volume of the individual components in the coating film can be calculated.
The following equation was used for the calculation of PVC (European Coatings Handbook, Ulrich Zorll, Vincent Verlag 2000*):*

$$\text{PVC [\%]} = \frac{\sum \text{Vpigments} + \sum \text{Vfillers}}{\sum \text{Vpigments} + \sum \text{Vfillers} + \sum \text{Vbinders}} * 100$$

$$= \frac{\sum \text{Vpigments} + \sum \text{Vfillers}}{\sum \text{Vtotal}} * 100$$

The following equations were used to calculate vol% solids:

$$\text{Volume} = (\text{weight / density})$$

$$\text{Vol\% solid} = \frac{\sum \text{Vol pigments and filler} + \sum \text{Vol solid binder} + \sum \text{Vol solid additives}}{\textit{Total wet paint volume}} * 100$$

• **Calculation of Volatile Organic Compounds (VOC), Semi Volatile Organic Compounds (SVOC) and Total Volatile Organic Compounds (TVOC)**

$$\text{VOC [g/L]} = \frac{\text{total weight VOC [g]}}{(\textit{weight paint / measured density paint})\ \text{[L]}}$$

$$\text{SVOC [g/L]} = \frac{\text{total weight SVOC [g]}}{(\textit{weight paint / measured density paint})\ \text{[L]}}$$

$$\text{TVOC [g/L]} = \frac{\text{total weight TVOC [g]}}{(\textit{weight paint / measured density paint})\ \text{[L]}}$$

The Volatile Organic Compounds, VOC (g/L), of the coating compositions was calculated as follows:

**Results**

The results of testing are set out in the Tables below.

Table 4, 1 cP = 1 mPa˙s

| | Example 1 | | Comparative 1 | | Comparative 2 | |
|---|---|---|---|---|---|---|
| Ingredients | Wt% | Vol% | Wt% | Vol% | Wt% | Vol% |
| $TiO_2$ | 21.42 | 7.61 | 21.43 | 7.62 | 21.55 | 7.62 |
| Water | 16.48 | 23.43 | 21.72 | 30.89 | 20.33 | 28.74 |
| Foam control agents | 0.53 | 0.75 | 0.53 | 0.75 | 0.54 | 0.76 |
| Rheology modifiers | 1.62 | 2.20 | 1.62 | 2.20 | 1.66 | 2.23 |
| Dispersing agents | 0.75 | 1.00 | 0.75 | 1.00 | 0.76 | 1.02 |
| Biocide | 0.39 | 0.51 | 0.39 | 0.51 | 0.40 | 0.52 |
| Micro Talc IT Extra | 4.98 | 2.56 | 4.98 | 2.56 | 5.04 | 2.57 |
| Zeeospheres W-210 | 13.70 | 8.11 | 13.70 | 8.12 | 13.73 | 8.08 |
| Poly(meth)acrylate dispersion I | 40.13 | 53.82 | - | - | - | - |
| Polyvinyl acetate dispersion | - | - | 34.88 | 46.35 | - | - |
| Styrene acrylic dispersion | - | - | - | - | 35.99 | 48.45 |
| **TOTAL (%)** | 100 | 100 | 100 | 100 | 100 | 100 |
| **Wt% solids** | 59.8 | | 59.8 | | 59.6 | |

(continued)

| TOTAL (%) | 100 | 100 | 100 | 100 | 100 | 100 |
|---|---|---|---|---|---|---|
| **Vol% solids** | 42.9 | | 42.9 | | 42.9 | |
| **PVC** | 44.4 | | 44.4 | | 44.4 | |
| **VOC (g/L)** | <1 | | <1 | | <1 | |
| **TVOC (g/L)** | <1 | | <1 | | <1 | |
| **Test results** | | | | | | |
| Density (g/cm$^3$) | 1.42 | | 1.42 | | 1.41 | |
| Viscosity, Stormer (KU) | 111 | | 76 | | 110 | |
| Viscosity, Cone & Plate (cP) | 126 | | 82 | | 115 | |
| Gloss 60° | 4.6 | | 3.9 | | 7.2 | |
| Gloss 85° | 8.0 | | 7.5 | | 11.0 | |
| Stain Penetration, Coffee | 0 | | 2 | | 0 | |
| Stain Penetration, Red wine | 0 | | 2 | | 1 | |
| Kinetic Friction | 0.59 | | 0.59 | | 0.61 | |
| Polish % Δ60° | 2 | | 6 | | 1 | |
| Polish % Δ85° | 24 | | 38 | | 22 | |

The results show that a coating formed from the coating composition of the invention (i.e. comprising a poly(meth)acrylate dispersion, solid, spherical filler particles and lamellar filler particles) has a desirable level of gloss and smoothness (as reflected by kinetic friction) as well as good strain penetration resistance and polish resistance. This is clear by comparing example 1 and comparative examples 1 and 2 which have substantially identical compositions except that the comparative examples do not comprise a poly(meth)acrylate dispersion having a MFFT of 5 °C or less. Instead the comparative examples comprise polyvinyl acetate and styrene acrylic dispersions. Example 1 has better stain penetration resistance, particularly for red wine, and improved polish resistance, compared to both comparative examples.

Table 5, 1 cP = 1 mPa˙s

| | Example 1 | | Comparative 3 | |
|---|---|---|---|---|
| Ingredients | Wt% | Vol% | Wt% | Vol% |
| $TiO_2$ | 21.42 | 7.61 | 21.32 | 7.57 |
| Water | 16.48 | 23.43 | 14.48 | 20.58 |
| Foam control agents | 0.53 | 0.75 | 0.53 | 0.76 |
| Rheology modifiers | 1.62 | 2.20 | 1.64 | 2.22 |
| Dispersing agents | 0.75 | 1.00 | 0.75 | 1.01 |
| Biocide | 0.39 | 0.51 | 0.39 | 0.52 |
| Micro Talc IT Extra | 4.98 | 2.56 | 5.01 | 2.57 |
| Zeeospheres W-210 | 13.70 | 8.11 | 13.74 | 8.13 |
| Poly(meth)acrylate dispersion I | 40.13 | 53.82 | - | |
| Poly(meth)acrylate dispersion II | - | - | 40.94 | 54.87 |
| Texanol | - | - | 1.19 | 1.77 |
| **TOTAL (%)** | 100 | 100 | 100 | 100 |
| **Wt% solids** | 59.8 | | 59.9 | |

(continued)

| | Example 1 | | Comparative 3 | |
|---|---|---|---|---|
| Ingredients | Wt% | Vol% | Wt% | Vol% |
| **Vol% solids** | 42.9 | | 42.9 | |
| **PVC** | 44.4 | | 44.4 | |
| **VOC (g/L)** | < 1 | | < 1 | |
| **TVOC (g/L)** | < 1 | | 17 | |
| **Test results** | | | | |
| Density (g/cm$^3$) | 1.42 | | 1.42 | |
| Viscosity Stormer (KU) | 111 | | 108 | |
| Viscosity, Cone & Plate (cP) | 126 | | 151 | |
| Gloss 60° | 4.6 | | 4.0 | |
| Gloss 85° | 8.0 | | 7.0 | |
| Stain Penetration, Coffee | 0 | | 0 | |
| Stain Penetration, Red wine | 0 | | 0 | |
| Polish % $\Delta$60° | 2 | | 2 | |
| Polish % $\Delta$85° | 24 | | 24 | |

The results show that a coating formed from the coating composition of the invention (i.e. comprising a poly(meth)acrylate dispersion, solid, spherical filler particles and lamellar filler particles) has a comparable level of gloss, strain penetration resistance and polish resistance to a comparative conventional composition comprising a polymer having better film properties but which requires the presence of a coalescent. The latter gives the comparative composition a much higher TVOC level which is disadvantageous, particularly for indoor paints. Example 1 is a coating composition of the present invention comprising a poly(meth)acrylate dispersion having a MFFT of 5 °C or less and lacking coalescent. In contrast comparative example 3 comprises a poly(meth)acrylate dispersion having a MFFT of 14 °C. As a result, it is necessary to include a coalescent in comparative example 3 (Texanol) which increases the TVOC content. The properties of the compositions (i.e. gloss, stain penetration and polish %) are similar.

Table 6, 1 cP = 1 mPa˙s

| | Example 1 | | Example 2 | | Comparative 4 | | Comparative 5 | |
|---|---|---|---|---|---|---|---|---|
| Ingredients | Wt% | Vol% | Wt% | Vol% | Wt% | Vol% | Wt% | Vol% |
| $TiO_2$ | 21.4 2 | 7.61 | 21.4 4 | 7.62 | 21.42 | 7.61 | 21.42 | 7.56 |
| Water | 16.4 8 | 23.4 3 | 16.4 9 | 23.4 5 | 16.48 | 23.43 | 16.48 | 23.47 |
| Foam control agents | 0.53 | 0.75 | 0.53 | 0.75 | 0.53 | 0.75 | 0.53 | 0.75 |
| Rheology modifiers | 1.62 | 2.20 | 1.63 | 2.20 | 1.62 | 2.20 | 1.62 | 2.20 |
| Dispersing agents | 0.75 | 1.00 | 0.75 | 1.00 | 0.75 | 1.00 | 0.75 | 1.00 |
| Biocide | 0.39 | 0.51 | 0.39 | 0.51 | 0.39 | 0.51 | 0.39 | 0.51 |
| Micro Talc IT Extra | 4.98 | 2.56 | 4.99 | 2.56 | 4.98 | 2.56 | 4.98 | 2.56 |
| Zeeospheres W-210 | 13.7 0 | 8.11 | - | - | - | - | - | - |
| Omicron NP5-P0 | - | | 13.7 1 | 8.12 | - | - | - | - |
| Zeeospheres W-410 | - | | - | - | 13.70 | 8.11 | - | - |
| Zeeospheres W-610 | - | | - | - | - | - | 13.70 | 8.11 |
| Poly(meth)acrylate dispersion I | 40.1 3 | 53.8 2 | 40.0 8 | 53.7 7 | 40.13 | 53.82 | 40.13 | 53.82 |

(continued)

| | Example 1 | | Example 2 | | Comparative 4 | | Comparative 5 | |
|---|---|---|---|---|---|---|---|---|
| Ingredients | Wt% | Vol% | Wt% | Vol% | Wt% | Vol% | Wt% | Vol% |
| **TOTAL (%)** | 100 | 100 | 100 | 100 | 100 | 100 | 100 | 100 |
| **Wt% solids** | 59.8 | | 59.8 | | 59.8 | | 59.8 | |
| **Vol% solids** | 42.9 | | 42.9 | | 42.9 | | 42.9 | |
| **PVC** | 44.4 | | 44.4 | | 44.4 | | 44.4 | |
| **VOC (g/L)** | <1 | | <1 | | <1 | | <1 | |
| **TVOC (g/L)** | <1 | | <1 | | <1 | | <1 | |
| **Test results** | | | | | | | | |
| Density (g/cm$^3$) | 1.42 | | 1.42 | | 1.42 | | 1.42 | |
| Viscosity, Stormer (KU) | 111 | | 110 | | 110 | | 110 | |
| Viscosity, Cone & Plate (cP) | 126 | | 137 | | 134 | | 122 | |
| Gloss 60° | 4.6 | | 5.0 | | 4.6 | | 4.1 | |
| Gloss 85° | 8.0 | | 7.9 | | 4.7 | | 2.9 | |
| Stain Penetration, Coffe | 0 | | 0 | | 0 | | 0 | |
| Stain Penetration, Red wine | 0 | | 0 | | 0 | | 0 | |
| Kinetic Friction | 0.59 | | 0.57 | | 0.64 | | 0.78 | |
| Polish % Δ60° | 2 | | 2 | | 2 | | 5 | |
| Polish % Δ85° | 24 | | 29 | | 23 | | 30 | |

The results in Table 6 show the impact of varying the size of the solid, spherical filler particles. Examples 1 and 2 and comparative examples 4 and 5 are identical except for the size of the solid, spherical filler particles present. In examples 1 and 2 the solid, spherical filler particles have a $D_{98}$ of 17.5 and 23.2 μm respectively. In comparative examples 4 and 5 the solid, spherical filler particles have a $D_{98}$ of 27.8 and 45.3 μm respectively. The results show that the compositions of the invention have a smoother surface, as measured by kinetic friction, than the comparative compositions. The comparative composition with the largest particles exhibits poor polishing resistance.

Table 7 , 1cP= 1 mPa·s

| | Example 1 | | Comparative 6 | | Comparative 7 | | Comparative 8 | |
|---|---|---|---|---|---|---|---|---|
| Ingredients | Wt% | Vol% | Wt% | Vol% | Wt% | Vol% | Wt% | Vol% |
| $TiO_2$ | 21.42 | 7.61 | 21.40 | 7.66 | 21.43 | 7.73 | 23.91 | 8.10 |
| Water | 16.48 | 23.43 | 16.24 | 23.25 | 16.16 | 23.31 | 18.21 | 24.68 |
| Foam control agents | 0.53 | 0.75 | 0.53 | 0.75 | 0.52 | 0.75 | 0.59 | 0.80 |
| Rheology modifiers | 1.62 | 2.20 | 1.62 | 2.21 | 1.61 | 2.21 | 1.84 | 2.38 |
| Dispersing agents | 0.75 | 1.00 | 0.74 | 1.01 | 0.74 | 1.01 | 0.76 | 0.97 |
| Biocide | 0.39 | 0.51 | 0.39 | 0.51 | 0.38 | 0.51 | 0.39 | 0.49 |
| Micro Talc IT Extra | 4.98 | 2.56 | 9.58 | 4.95 | 14.66 | 7.63 | 5.61 | 2.74 |
| Zeeospheres W-210 | 13.70 | 8.11 | 9.58 | 5.72 | 4.91 | 2.95 | 3.39 | 1.91 |
| Poly(meth)acrylate dispersion I | 40.13 | 53.82 | 39.92 | 53.93 | 39.60 | 53.90 | 45.30 | 57,92 |
| **TOTAL** | 100 | 100 | 100 | 100 | 100 | 100 | 100 | 100 |
| **Wt% solids** | 59.8 | | 60.2 | | 60.4 | | 55.1 | |

(continued)

| | Example 1 | | Comparative 6 | | Comparative 7 | | Comparative 8 | |
|---|---|---|---|---|---|---|---|---|
| Ingredients | Wt% | Vol% | Wt% | Vol% | Wt% | Vol% | Wt% | Vol% |
| **Vol% solids** | 42.9 | | 42.9 | | 42.9 | | 39.1 | |
| **PVC** | 44.4 | | 44.4 | | 44.4 | | 34.1 | |
| **VOC (g/L)** | <1 | | <1 | | <1 | | <1 | |
| **TVOC (g/L)** | <1 | | <1 | | <1 | | <1 | |
| **Test results** | | | | | | | | |
| Density (g/cm$^3$) | 1.42 | | 1.43 | | 1.44 | | 1.36 | |
| Viscosity, Stormer (KU) | 111 | | 111 | | 110 | | 104 | |
| Viscosity, Cone & Plate (cP) | 126 | | 131 | | 124 | | 121 | |
| Gloss 60° | 4.6 | | 4.7 | | 4.7 | | 10.2 | |
| Gloss 85° | 8.0 | | 11.0 | | 16.0 | | 28.5 | |
| Stain Penetration, Coffee | 0 | | 0 | | 0 | | 0 | |
| Stain Penetration, Red wine | 0 | | 0 | | 0 | | 0 | |
| Kinetic Friction | 0.59 | | 0.57 | | 0.56 | | 0.54 | |
| Polish % ∆60° | 2 | | 3 | | 5 | | 8 | |
| Polish % ∆85° | 24 | | 21 | | 32 | | 48 | |

The results in Table 7 show the impact of varying the amount of solid, spherical filler particles to lamellar filler particles. Specifically, in example 1 the weight % of solid, spherical filler particles is greater than the weight % of lamellar filler particles (13.70 wt% vs. 4.98 wt%). In comparative example 6 the weight % of solid, spherical filler particles and lamellar filler particles is the same and in comparative examples 7 and 8 the weight % of solid, spherical filler particles is less than the weight of lamellar filler particles. The results show that the compositions of the invention comprising a higher weight % of solid, spherical filler particles relative to lamellar filler particles have a more desirable (i.e. lower) gloss level. The presence of greater amounts of lamellar filler particles increases the gloss level, particularly at 85°. Comparative examples 7 and 8, which contain a higher wt% of lamellar filler particles than solid, spherical filler particles, also have a significantly poorer polishing performance than example 1 of the invention.

Table 8, 1 cP = 1 mPa˙s

| | Example 1 | | Comparative 9 | | Comparative 10 | | Comparative 11 | |
|---|---|---|---|---|---|---|---|---|
| Ingredients | Wt% | Vol% | Wt% | Vol% | Wt% | Vol% | Wt% | Vol% |
| $TiO_2$ | 21.4 2 | 7.61 | 20.91 | 7.63 | 20.91 | 7.64 | 21.1 1 | 7.66 |
| Water | 16.4 8 | 23.4 3 | 16.05 | 23.41 | 15.98 | 23.34 | 16.0 3 | 23.2 8 |
| Foam control agents | 0.53 | 0.75 | 0.52 | 0.75 | 0.52 | 0.76 | 0.53 | 0.77 |
| Rheology modifiers | 1.62 | 2.20 | 1.59 | 2.20 | 1.61 | 2.24 | 1.62 | 2.24 |
| Dispersing agents | 0.75 | 1.00 | 0.73 | 1.00 | 0.74 | 1.02 | 0.75 | 1.02 |
| Biocide | 0.39 | 0,51 | 0.38 | 0.51 | 0.38 | 0.52 | 0.39 | 0.52 |
| Micro Talc IT Extra | 4.98 | 2.56 | 4.96 | 2.61 | - | - | 20.2 5 | 10.6 2 |
| Zeeospheres W-210 | 13.7 0 | 8.11 | - | - | - | - | - | - |
| Microdol 1 | - | - | 15.78 | 8.07 | - | - | - | - |
| Microdol 10D | - | - | - | - | 20.81 | 10.67 | - | - |
| Poly(meth)acrylate dispersion I | 40.1 3 | 53.8 2 | 39.10 | 53.81 | 39.05 | 53.82 | 39.3 3 | 53.8 8 |

(continued)

| | Example 1 | | Comparative 9 | | Comparative 10 | | Comparative 11 | |
|---|---|---|---|---|---|---|---|---|
| Ingredients | Wt% | Vol% | Wt% | Vol% | Wt% | Vol% | Wt% | Vol% |
| **TOTAL (%)** | 100 | 100 | 100 | 100 | 100 | 100 | 100 | 100 |
| **Wt% solids** | 59.8 | | 60.8 | | 60.9 | | 60.7 | |
| **Vol% solids** | 42.9 | | 42.9 | | 42.9 | | 42.9 | |
| **PVC** | 44.4 | | 44.4 | | 44.4 | | 44.4 | |
| **VOC (g/L)** | <1 | | <1 | | <1 | | <1 | |
| **TVOC (g/L)** | <1 | | <1 | | <1 | | <1 | |
| **Test results** | | | | | | | | |
| Density (g/cm$^3$) | 1.42 | | 1.46 | | 1.46 | | 1.45 | |
| Viscosity Stormer (KU) | 111 | | 119 | | 105 | | 119 | |
| Cone & Plate (cP) | 126 | | 140 | | 130 | | 126 | |
| Gloss 60° | 4.6 | | 5.1 | | 4.8 | | 4.7 | |
| Gloss 85° | 8.0 | | 9.8 | | 4.4 | | 36.0 | |
| Stain Penetration, Coffee | 0 | | 0 | | 0 | | 0 | |
| Stain Penetration, Red wine | 0 | | 0 | | 0 | | 0 | |
| Kinetic Friction | 0.59 | | 0.60 | | 0.77 | | 0.53 | |
| Polish % $\Delta$60° | 2 | | 1 | | 4 | | 8 | |
| Polish % $\Delta$85° | 24 | | 18 | | 20 | | 13 | |

The results in Table 8 show the impact of the form of the filler particles. Specifically, in example 1 lamellar filler particles are combined with solid, spherical filler particles and the resulting coating composition produces a coating having a desirable gloss level as well as smoothness, stain penetration resistance and polish resistance. In contrast comparative example 9, which comprises non-spherical filler particles produces a coating with too high a gloss level. Comparative example 10 which lacks lamellar filler particles and comprises non-spherical filler particles produces a coating with a comparatively high level of kinetic friction indicating the surface is non-smooth. Comparative example 11, which lacks solid, spherical filler particles, produces a coating with a very high gloss level. Only the composition of the invention, which comprises a combination of solid, spherical, filler particles and lamellar filler particles yields coatings with a desirable combination of properties.

Table 9, 1 cP = 1 mPa˙s

| Ingredients | Example 1 | | Example 3 | | Example 4 | |
|---|---|---|---|---|---|---|
| | Wt% | Vol% | Wt% | Vol% | Wt% | Vol% |
| $TiO_2$ | 21.42 | 7.61 | 21.43 | 7.62 | 21.52 | 7.63 |
| Water | 16.48 | 23.43 | 16.45 | 23.38 | 16.49 | 23.38 |
| Foam control agents | 0.53 | 0.75 | 0.53 | 0.75 | 0.53 | 0.75 |
| Rheology modifiers | 1.62 | 2.20 | 1.62 | 2.20 | 1.63 | 2.20 |
| Dispersing agents | 0.75 | 1.00 | 0.75 | 1.00 | 0.75 | 1.00 |
| Biocide | 0.39 | 0.51 | 0.39 | 0.51 | 0.39 | 0.51 |
| Micro Talc IT Extra | 4.98 | 2.56 | - | - | - | - |
| Belcatalc | - | | 4.98 | 2.56 | - | - |
| Speswhite | - | | - | - | 4.71 | 2.57 |

(continued)

| Ingredients | Example 1 | | Example 3 | | Example 4 | |
|---|---|---|---|---|---|---|
| | Wt% | Vol% | Wt% | Vol% | Wt% | Vol% |
| Zeeospheres W-210 | 13.70 | 8.11 | 13.70 | 8.12 | 13.69 | 8.09 |
| Poly(meth)acrylate dispersion I | 40.13 | 53.82 | 40.15 | 53.85 | 40.28 | 53.87 |
| TOTAL (%) | 100 | 100 | 100 | 100 | 100 | 100 |
| **Wt% solids** | 59.8 | | 59.8 | | 59.7 | |
| **Vol% solids** | 42.9 | | 42.9 | | 42.9 | |
| **PVC** | 44.4 | | 44.4 | | 44.4 | |
| **VOC (g/L)** | <1 | | <1 | | <1 | |
| **TVOC (gLl)** | <1 | | <1 | | <1 | |
| **Test results** | | | | | | |
| Density (g/cm$^3$) | 1.42 | | 1.42 | | 1.42 | |
| Viscosity, Stormer (KU) | 111 | | 107 | | 107 | |
| Viscosity, Cone & Plate (cP) | 126 | | 120 | | 119 | |
| Gloss 60° | 4.6 | | 4,9 | | 5.4 | |
| Gloss 85° | 8.0 | | 7.4 | | 9.4 | |
| Stain Penetration, Coffee | 0 | | 0 | | 0 | |
| Stain Penetration, Red wine | 0 | | 0 | | 0 | |
| Kinetic Friction | 0.59 | | 0.60 | | 0.58 | |
| Polish % Δ60 ° | 2 | | 3 | | 2 | |
| Polish % Δ85° | 24 | | 21 | | 25 | |

The results in Table 9 are for three compositions of the present invention. The results show that with different types (talc and kaolin) and sizes of lamellar filler particles a desirable balance of gloss level, surface smoothness, stain penetration resistance and polish resistance can be achieved.

Table 10, 1 cP = 1 mPa˙s

| | Example 5 | | Example 1 | |
|---|---|---|---|---|
| Ingredients | Wt% | Vol% | Wt% | Vol% |
| $TiO_2$ | 20.25 | 7.05 | 21.42 | 7.61 |
| Water | 15.24 | 21.22 | 16.48 | 23.43 |
| Foam control agents | 0.51 | 0.71 | 0.53 | 0.75 |
| Rheology modifiers | 1.57 | 2.09 | 1.62 | 2.20 |
| Dispersing agents | 0.72 | 0.95 | 0.75 | 1.00 |
| Biocide | 0.38 | 0.49 | 0.39 | 0.51 |
| Micro Talc IT Extra | 4.63 | 2.33 | 4.98 | 2.56 |
| Zeeospheres W-210 | 12.73 | 7.39 | 13.70 | 8.11 |
| Poly(meth)acrylate dispersion I | 43.97 | 57.78 | 40.13 | 53.82 |
| **TOTAL (%)** | 100 | 100 | 100 | 100 |
| **Wt% solids** | 59.0 | | 59.8 | |

(continued)

| | Example 5 | | Example 1 | |
|---|---|---|---|---|
| Ingredients | Wt% | Vol% | Wt% | Vol% |
| **Vol% solids** | 42.9 | | 42.9 | |
| **PVC** | 40.5 | | 44.4 | |
| **VOC (g/L)** | <1 | | <1 | |
| **TVOC (g/L)** | <1 | | <1 | |
| **Test results** | | | | |
| Density (g/cm$^3$) | 1.39 | | 1.42 | |
| Viscosity, Stormer (KU) | 106 | | 111 | |
| Viscosity, Cone & Plate (cP) | 137 | | 126 | |
| Gloss 60° | 5.1 | | 4.6 | |
| Gloss 85° | 8.5 | | 8.0 | |
| Stain Penetration, Coffee | 0 | | 0 | |
| Stain Penetration, Red wine | 0 | | 0 | |
| Kinetic Friction | 0.59 | | 0.59 | |
| Polish % $\Delta$60 ° | 3 | | 2 | |
| Polish % $\Delta$85 ° | 23 | | 24 | |

The results in Table 10 are for two compositions of the present invention. The results show that with different PVC levels, a desirable balance of gloss level, surface smoothness, stain penetration resistance and polish resistance can be achieved.

## Claims

**1.** A coating composition comprising:

(i) a poly(meth)acrylate dispersion, wherein said poly(meth)acrylate has a minimum film formation temperature (MFFT), as determined by ASTM D2354-10e1, of 5 °C or less;
(ii) solid, spherical filler particles having a $D_{98}$, as determined according to ISO 13320 by using a Mastersizer 2000, with a Hydro G dispersion unit, of less than 25 $\mu$m;
(iii) lamellar filler particles, preferably inorganic lamellar filler particles; and
(iv) water,

wherein said composition comprises a higher weight % of said solid, spherical filler particles than said lamellar filler particles, and preferably wherein the weight ratio of said solid, spherical filler particles to said lamellar filler particles is at least 1.2:1.

**2.** A composition as claimed in claim 1, wherein said poly(meth)acrylate dispersion comprises a poly(meth)acrylate polymer comprising at least 65 wt% (meth)acrylate monomers, based on the dry weight of the polymer.

**3.** A composition as claimed in claim 1 or 2, wherein said composition comprises 5-40 wt% poly(meth)acrylate, based on dry weight of polymer in the total weight of the composition.

**4.** A composition as claimed in any preceding claim, wherein said composition comprises less than 4 wt% coalescent.

**5.** A composition as claimed in any preceding claim, wherein said solid, spherical filler particles are inorganic, preferably glass or ceramic.

**6.** A composition as claimed in any preceding claim, wherein said solid, spherical filler particles have a particle diameter size, $D_{98}$, as determined according to ISO 13320 by using a Mastersizer 2000, with a Hydro G dispersion unit, of 10 to 25 μm.

**7.** A composition as claimed in any preceding claim, wherein said solid, spherical filler particles have a particle diameter size, $D_{50}$, as determined according to ISO 13320 by using a Mastersizer 2000, with a Hydro G dispersion unit, of 1 to 12 μm.

**8.** A composition as claimed in any preceding claim, wherein said composition comprises 1-35 wt% solid, spherical filler particles, based on total weight coating composition dry solids.

**9.** A composition as claimed in any preceding claim, wherein said composition comprises 0.5-25 wt% lamellar filler particles, based on total weight coating composition dry solids.

**10.** A composition as claimed in any preceding claim, wherein said composition has a VOC of less than 30 g/L and/or a TVOC of less than 50 g/L and/or a PVC of less than 50 %, wherein these VOC, TVOC and PVC are calculated as described herein.

**11.** A method for preparing a composition as claimed in any one of claims 1-10, comprising mixing:

(i) a poly(meth)acrylate dispersion, wherein said poly(meth)acrylate has a minimum film formation temperature (MFFT), as determined by ASTM D2354-10e1, of 5 °C or less;
(ii) solid, spherical filler particles having a $D_{98}$, determined according to ISO 13320 by using a Mastersizer 2000, with a Hydro G dispersion unit, of less than 25 μm;
(iii) lamellar filler particles; and
(iv) water.

**12.** A container containing a composition as claimed in any one of claims 1 to 10.

**13.** A method of providing a coating on a surface, wherein said method comprises:

(i) applying a composition as claimed in any one of claims 1 to 10; and
(ii) allowing said composition to dry to form a coating on the surface.

**14.** A coating on a surface, preferably a wall, wherein said coating is formed from a composition as claimed in any one of claims 1 to 10.

**15.** Use of a composition as claimed in any one of claims 1 to 10 to form a coating on a wall.

**Patentansprüche**

**1.** Beschichtungszusammensetzung umfassend:

(i) eine Poly(meth)acrylatdispersion, wobei das Poly(meth)acrylat eine Mindestfilmbildungstemperatur (MFFT), wie durch ASTM D2354-10e1 bestimmt, von 5 °C oder weniger aufweist,
(ii) feste, kugelförmige Füllstoffteilchen, die eine $D_{98}$, wie ISO 13320 entsprechend durch Verwenden eines Mastersizers 2000, mit einer Hydro G-Dispersionseinheit bestimmt, von weniger als 25 μm aufweisen;
(iii) lamellenförmige Füllstoffteilchen, bevorzugt anorganische lamellenförmige Füllstoffteilchen, und
(iv) Wasser,

wobei die Zusammensetzung ein höheres Gewichts-% der festen, kugelförmigen Füllstoffteilchen als die lamellenförmigen Füllstoffteilchen umfasst und wobei bevorzugt das Gewichtsverhältnis der festen, kugelförmigen Füllstoffteilchen zu den lamellenförmigen Füllstoffteilchen mindestens 1,2;1 beträgt.

**2.** Zusammensetzung nach Anspruch 1, wobei die Poly(meth)acrylatdispersion ein Poly(meth)acrylatpolymer umfasst, das mindestens 65 Gew.-% (Meth)acrylatmonomere, auf das Trockengewicht des Polymers bezogen, umfasst.

3. Zusammensetzung nach Anspruch 1 oder 2, wobei die Zusammensetzung 5 bis 40 Gew.-% Poly(meth)acrylat, auf Trockengewicht von Polymer im Gesamtgewicht der Zusammensetzung bezogen, umfasst.

4. Zusammensetzung nach einem der vorhergehenden Ansprüche, wobei die Zusammensetzung weniger als 4 Gew.-% Koaleszenzmittel umfasst.

5. Zusammensetzung nach einem der vorhergehenden Ansprüche, wobei die festen, kugelförmigen Füllstoffteilchen anorganisch, bevorzugt Glas oder Keramik, sind.

6. Zusammensetzung nach einem der vorhergehenden Ansprüche, wobei die festen, kugelförmigen Füllstoffteilchen eine Teilchendurchmessergröße, $D_{98}$, wie ISO 13320 entsprechend durch Verwenden eines Mastersizers 2000, mit einer Hydro G-Dispersionseinheit bestimmt, von 10 bis 25 $\mu$m aufweisen.

7. Zusammensetzung nach einem der vorhergehenden Ansprüche, wobei die festen, kugelförmigen Füllstoffteilchen eine Teilchendurchmessergröße, $D_{50}$, wie ISO 13320 entsprechend durch Verwenden eines Mastersizers 2000, mit einer Hydro G-Dispersionseinheit bestimmt, von 1 bis 12 $\mu$m aufweisen.

8. Zusammensetzung nach einem der vorhergehenden Ansprüche, wobei die Zusammensetzung 1 bis 35 Gew.-% feste, kugelförmige Füllstoffteilchen, auf das Gesamtgewicht der Trockenfeststoffe der Beschichtungszusammensetzung bezogen, umfasst.

9. Zusammensetzung nach einem der vorhergehenden Ansprüche, wobei die Zusammensetzung 0,5 bis 25 Gew.-% lamellenförmige Füllstoffteilchen, auf das Gesamtgewicht der Trockenfeststoffe der Beschichtungszusammensetzung bezogen, umfasst.

10. Zusammensetzung nach einem der vorhergehenden Ansprüche, wobei die Zusammensetzung eine VOC von weniger als 30 g/l und/oder eine TVOC von weniger als 50 g/l und/oder ein PVC von weniger als 50 % aufweist, wobei diese VOC, TVOC und PVC wie hierin beschrieben berechnet werden.

11. Verfahren für die Herstellung einer Zusammensetzung nach einem der Ansprüche 1 bis 10, umfassend Mischen von:

(i) einer Poly(meth)acrylatdispersion, wobei das Poly(meth)acrylat eine Mindestfilmbildungstemperatur (MFFT), wie durch ASTM D2354-10e1 bestimmt, von 5 °C oder weniger aufweist,
(ii) festen, kugelförmigen Füllstoffteilchen, die eine $D_{98}$, ISO 13320 entsprechend durch Verwenden eines Mastersizers 2000, mit einer Hydro G-Dispersionseinheit bestimmt, von weniger als 25 $\mu$m aufweisen;
(iii) lamellenförmigen Füllstoffteilchen, und
(iv) Wasser.

12. Behälter enthaltend eine Zusammensetzung nach einem der Ansprüche 1 bis 10.

13. Verfahren für das Bereitstellen einer Beschichtung auf einer Oberfläche, wobei das Verfahren Folgendes umfasst:

(i) Aufbringen einer Zusammensetzung nach einem der Ansprüche 1 bis 10; und
(ii) Gestatten der Zusammensetzung, zu trocknen, um eine Beschichtung auf der Oberfläche zu bilden.

14. Beschichtung auf einer Oberfläche, bevorzugt einer Wand, wobei die Beschichtung aus einem Zusammensetzung nach einem der Ansprüche 1 bis 10 gebildet wird.

15. Verwendung einer Zusammensetzung nach einem der Ansprüche 1 bis 10, um eine Beschichtung auf einer Wand zu bilden.

**Revendications**

1. Composition de revêtement comprenant :

(i) une dispersion de poly(méth)acrylate, dans laquelle ledit poly(méth)acrylate présente une température minimale de formation de film (TMFF), telle que déterminée par la norme ASTM D2354-10e1, de 5 °C ou moins ;

(ii) des particules de charge solides et sphériques ayant une valeur $D_{98}$, telle que déterminée selon la norme ISO 13320 en utilisant un Mastersizer 2000, avec une unité de dispersion Hydro G, de moins de 25 μm ;
(iii) des particules de charge lamellaires, de préférence des particules de charge lamellaires inorganiques ; et
(iv) de l'eau,

dans laquelle ladite composition comprend un pourcentage en poids desdites particules de charge solides et sphériques supérieur à celui desdites particules de charge lamellaires, et de préférence dans laquelle le rapport en poids entre lesdites particules de charge solides et sphériques et lesdites particules de charge lamellaires est d'au moins 1,2:1.

**2.** Composition selon la revendication 1, dans laquelle ladite dispersion de poly(méth)acrylate comprend un polymère poly(méth)acrylate comprenant au moins 65 % en poids de monomères de (méth)acrylate, sur la base du poids sec du polymère.

**3.** Composition selon la revendication 1 ou 2, dans laquelle ladite composition comprend de 5 à 40 % en poids de poly(méth)acrylate, sur la base du poids sec du polymère dans le poids total de la composition.

**4.** Composition selon l'une quelconque des revendications précédentes, dans laquelle ladite composition comprend moins de 4 % en poids d'agent de coalescence.

**5.** Composition selon l'une quelconque des revendications précédentes, dans laquelle lesdites particules de charge solides et sphériques sont inorganiques, de préférence du verre ou de la céramique.

**6.** Composition selon l'une quelconque des revendications précédentes, dans laquelle lesdites particules de charge solides et sphériques présentent un diamètre de particule, $D_{98}$, tel que déterminé selon la norme ISO 13320 en utilisant un Mastersizer 2000, avec une unité de dispersion Hydro G, de 10 à 25 μm.

**7.** Composition selon l'une quelconque des revendications précédentes, dans laquelle lesdites particules de charge solides et sphériques présentent un diamètre de particule, $D_{50}$, tel que déterminé selon la norme ISO 13320 en utilisant un Mastersizer 2000, avec une unité de dispersion Hydro G, de 1 à 12 μm.

**8.** Composition selon l'une quelconque des revendications précédentes, dans laquelle ladite composition comprend de 1 à 35 % en poids de particules de charge solides et sphériques, sur la base du poids total des solides secs dans la composition de revêtement.

**9.** Composition selon l'une quelconque des revendications précédentes, dans laquelle ladite composition comprend de 0,5 à 25 % en poids de particules de charge lamellaires, sur la base du poids total des solides secs dans la composition de revêtement.

**10.** Composition selon l'une quelconque des revendications précédentes, dans laquelle ladite composition présente une COV de moins de 30 g/L et/ou une COVT de moins de 50 g/L et/ou une CPV de moins de 50 %, dans laquelle ces COV, COVT et CPV sont calculées tel que décrit dans les présentes.

**11.** Procédé de préparation d'une composition selon l'une quelconque des revendications 1 à 10, comprenant le mélange :

(i) d'une dispersion de poly(méth)acrylate, dans laquelle ledit poly(méth)acrylate présente une température minimale de formation de film (TMFF), telle que déterminée par la norme ASTM D2354-10e1, de 5 °C ou moins ;
(ii) de particules de charge solides et sphériques ayant une valeur $D_{98}$, telle que déterminée selon la norme ISO 13320 en utilisant un Mastersizer 2000, avec une unité de dispersion Hydro G, de moins de 25 μm ;
(iii) de particules de charge lamellaires ; et
(iv) d'eau.

**12.** Récipient contenant une composition selon l'une quelconque des revendications 1 à 10.

**13.** Procédé de réalisation d'un revêtement sur une surface, dans lequel ledit procédé comprend les étapes consistant à :

(i) appliquer une composition selon l'une quelconque des revendications 1 à 10 ; et

(ii) laisser sécher ladite composition pour former un revêtement sur la surface.

**14.** Revêtement sur une surface, de préférence un mur, dans lequel ledit revêtement est formé à partir d'une composition selon l'une quelconque des revendications 1 à 10.

**15.** Utilisation d'une composition selon l'une quelconque des revendications 1 à 10 pour former un revêtement sur un mur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017015006 A
- WO 2016176145 A


### Non-patent literature cited in the description


- *Journal of Coatings Technology and Research,* September 2008, vol. 5 (3), 285-297
- **ULRICH ZORLL.** European Coatings Handbook. Vincent Verlag, 2000